# EUROPEAN PATENT SPECIFICATION

(11) **EP 4 033 836 B1**
(45) Date of publication and mention of the grant of the patent: **09.12.2026**
(21) Application number: 20851670.8
(22) Date of filing: 14.08.2020
(51) Int. Cl.: H04L 1/00, H04W 72/04, H04L 5/00, H04W 52/02

(54) **METHODS FOR SCRAMBLING AND DESCRAMBLING, NETWORK DEVICE AND TERMINAL DEVICE**
VERFAHREN ZUR VER- UND ENTSCHLÜSSELUNG, NETZWERKVORRICHTUNG UND ENDGERÄT
PROCÉDÉ DE BROUILLAGE ET DE DÉSEMBROUILLAGE, DISPOSITIF DE RÉSEAU ET ÉQUIPEMENT TERMINAL

(30) Priority: 14.08.2019 CN 201910750180
(43) Date of publication of application: 27.07.2022
(73) Proprietor: Huawei Technologies Co., Ltd., Longgang District Shenzhen, Guangdong 518129 (CN)
(72) Inventor: CHEN, Zheng, Shenzhen, Guangdong 518129 (CN); ZHANG, Xu, Shenzhen, Guangdong 518129 (CN); XUE, Lixia, Shenzhen, Guangdong 518129 (CN)
(74) Representative: Isarpatent
(86) International application number: PCT/CN2020/109095
(87) International publication number: WO 2021/027910

(56) References cited:
- EP-A1- 4 013 131
- WO-A2-2010/147435
- CN-A- 108 076 441
- US-A1- 2019 200 307
- HUAWEI ET AL: "PDCCH-based power saving signal/channel", vol. RAN WG1, no. Reno, USA; 20190513 - 20190517, 13 May 2019 (2019-05-13), XP051727462, Retrieved from the Internet <URL:http://www.3gpp.org/ftp/Meetings%5F3GPP%5FSYNC/RAN1/Docs/R1%2D1906005%2Ezip> [retrieved on 20190513]
- CATT: "Summary of PDCCH-based Power Saving Signal/Channel", vol. RAN WG1, no. Reno, China; 20190513 - 20190517, 17 May 2019 (2019-05-17), XP051740083, Retrieved from the Internet <URL:http://www.3gpp.org/ftp/tsg%5Fran/WG1%5FRL1/TSGR1%5F97/Docs/R1%2D1907809%2Ezip> [retrieved on 20190517]
- MEDIATEK INC.: "Design of PDCCH-based power saving signal/channel for NR", 3GPP DRAFT; R1-1906548_DESIGN OF PDCCH-BASED POWER SAVING SIGNAL OR CHANNEL FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 4 May 2019 (2019-05-04), Mobile Competence Centre ; 650, route des Lucioles ; F-06921 Sophia-Antipolis Cedex ; France, XP051708584

## Description

### TECHNICAL FIELD

This application relates to the field of communications technologies, and in particular, to a scrambling method, a descrambling method, a communication device, a computer program product, and a computer-readable storage medium.

### BACKGROUND

In a new radio (new radio, NR) system, a terminal device works in a larger radio frequency and a larger baseband bandwidth. In a discontinuous reception cycle (discontinuous reception cycle, DRX cycle), the terminal device needs to first wake up from a sleep state, enable radio frequency and baseband circuits, achieve time-frequency synchronization, and then detect a physical downlink control channel (physical downlink control channel, PDCCH) in on duration (on duration). These processes consume a large amount of power. However, data transmission is usually bursty and sparse in terms of time. If a network device does not perform data scheduling for the terminal device in the on duration, unnecessary energy consumption is caused for the terminal device. Therefore, to reduce power consumption, a power saving signal/channel (power saving signal/channel) may be introduced into the NR.

Usually, a value of a scrambling code sequence of a PDCCH may meet requirements of most PDCCHs on a block error ratio. However, for some PDCCHs that require relatively high detection performance, for example, the power-saving signal/channel that requires relatively high detection performance, an existing PDCCH scrambling method cannot meet the requirements of the PDCCHs that require relatively high detection performance.

Document "PDCCH-based power saving signal/channel" from Huawei et al., 3GPP DRAFT, R1-1906005, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Reno, USA, 20190513 - 20190517, 13 May 2019 (2019-05-13), XP051727462, discloses some issues of PDCCH-based power saving signal/channel.

### SUMMARY

This application provides a scrambling method, a descrambling method, a communication device, a computer program product, and a computer-readable storage medium, as defined in the appended set of claims, to improve detection performance of a first PDCCH.

To improve demodulation and detection performance of the DMRS of the first PDCCH, the network device may introduce an initialization parameter (which is referred to as the second scrambling parameter in this specification) of the DMRS of the first PDCCH. The second scrambling parameter may be understood as being specific to a PDCCH carrying power saving information. The second scrambling parameter is different from a scrambling parameter of a DMRS of another type of PDCCH (including a PDCCH in the NR release 15). It can be learned that, in a scenario in which the second scrambling parameter is introduced, the network device may generate the scrambling code sequence for the first PDCCH based on the second scrambling parameter, so that the scrambling code sequence used by the first PDCCH is different from a scrambling code sequence used by another type of PDCCH, and a terminal device is not susceptible to interference from another type of PDCCH. The terminal device descrambles the first PDCCH based on the scrambling code sequence, to reduce a block error ratio of the first PDCCH and improve detection performance of the first PDCCH.

The scrambling code sequence is generated for the first PDCCH based on the physical cell identifier and the first radio network temporary identifier, so that not only the first PDCCH can be distinguished from another type of PDCCH, but also interference from a first PDCCH sent by a neighboring cell can be reduced.

The present application provides a specific manner of generating the scrambling code sequence for the first PDCCH, and increases solution diversity.

In the technical solution provided in this application, the network device generates, based on the first radio network temporary identifier and the first parameter, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH, and reduce interference from a first PDCCH sent by a neighboring cell.

### BRIEF DESCRIPTION OF DRAWINGS

FIG. 1 is a schematic diagram of a wireless communications system applicable to an embodiment of this application;
FIG. 2 is a schematic diagram of another wireless communications system applicable to an embodiment of this application;
FIG. 3 is a schematic diagram of a PDCCH sending processing procedure;
FIG. 4 is a schematic diagram of receiving and detection of a PDCCH;
FIG. 5 is a schematic diagram of a DRX cycle;
FIG. 6 is a schematic diagram of an operating principle of a first power saving signal;
FIG. 7 is a schematic diagram of an operating principle of a second power saving signal;
FIG. 8 is a schematic flowchart of a data processing method 800 according to an embodiment of this application;
FIG. 9 is a schematic flowchart of a data processing method 900 according to an embodiment of this application;
FIG. 10 is a schematic flowchart of a data processing method 1000 according to an embodiment of this application;
FIG. 11 is a schematic flowchart of a data processing method 1100 according to an embodiment of this application;
FIG. 12 is a schematic flowchart of a data processing method 1200 according to an embodiment of this application;
FIG. 13 is a schematic flowchart of a data processing method 1300 according to an embodiment of this application;
FIG. 14 is a schematic flowchart of a data processing method 1400 according to an embodiment of this application;
FIG. 15 is a schematic diagram of a hardware structure of a network device according to an embodiment of this application;
FIG. 16 is a schematic diagram of a structure of a network device according to an embodiment of this application;
FIG. 17 is a schematic diagram of a hardware structure of a terminal device according to an embodiment of this application; and
FIG. 18 is a schematic diagram of a structure of a terminal device according to an embodiment of this application.

### DESCRIPTION OF EMBODIMENTS

The following describes embodiments of this application with reference to accompanying drawings. It is clear that the described embodiments are merely some rather than all of the embodiments of this application. A person of ordinary skill in the art may learn that the technical solutions provided in the embodiments of this application are also applicable to a similar technical problem as a technology evolves and a new scenario emerges.

The embodiments of this application provide a scrambling method. A network device generates, based on a first radio network temporary identifier and a first parameter, a scrambling code sequence for a first PDCCH carrying power saving information. In this way, the scrambling code sequence of the first PDCCH is less related to a scrambling code sequence of another PDCCH, to improve detection performance of the first PDCCH, and reduce interference from a first PDCCH sent by a neighboring cell. Corresponding to the scrambling method, the embodiments of this application further provide a descrambling method. A terminal device descrambles, based on the first radio network temporary identifier and the first parameter, the first PDCCH carrying power saving information, to improve detection performance of the first PDCCH. Details are separately described below.

In the specification, claims, and the accompanying drawings of this application, the terms "first", "second", and the like are intended to distinguish similar objects but do not necessarily indicate a specific order or sequence. It should be understood that data termed in such a way is interchangeable in proper circumstances, so that the embodiments described herein can be implemented in other orders than the order illustrated or described herein. In addition, terms "include" and "have" and any other variants thereof are intended to cover the non-exclusive inclusion, for example, a process, method, system, product, or device including a list of steps or modules is not necessarily limited to those clearly listed steps or modules, but may include other steps or modules that are not clearly listed or are inherent to such a process, method, product, or device. Naming or numbering of steps in this application does not mean that steps in the method procedure need to be performed according to a time/logical order indicated by the naming or numbering. An execution order of process steps that have been named or numbered may be changed according to a technical objective to be implemented, provided that a same or similar technical effect can be achieved. Division into the modules in this application is logical division. During actual application, there may be another division manner. For example, a plurality of modules may be combined or integrated into another system, or some features may be ignored or not performed. In addition, the displayed or discussed mutual couplings or direct couplings or communication connections may be implemented through some ports, and the indirect couplings or communication connections between the modules may be implemented in an electrical form or another similar form. This is not limited in this application. In addition, modules or sub-modules described as separate components may be or may not be physically separated, or may be or may not be physical modules, or may be distributed into a plurality of circuit modules. Objectives of the solutions of this application may be achieved by selecting some or all of the modules based on an actual requirement.

It should be noted that in the embodiments of this application, terms "network" and "system" are usually interchangeably used, but meanings of the terms may be understood by a person skilled in the art. Terms "information (information)", "signal (signal)", "message (message)", and "channel (channel)" may be interchangeably used sometimes. It should be noted that meanings expressed by the terms are consistent when differences of the terms are not emphasized.

It should be further noted that, in the embodiments of this application, terms "reporting", "feedback", and "response" are usually interchangeably used, but meanings of the terms may be understood by a person skilled in the art. Therefore, in the embodiments of this application, meanings expressed by the terms are consistent when differences of the terms are not emphasized.

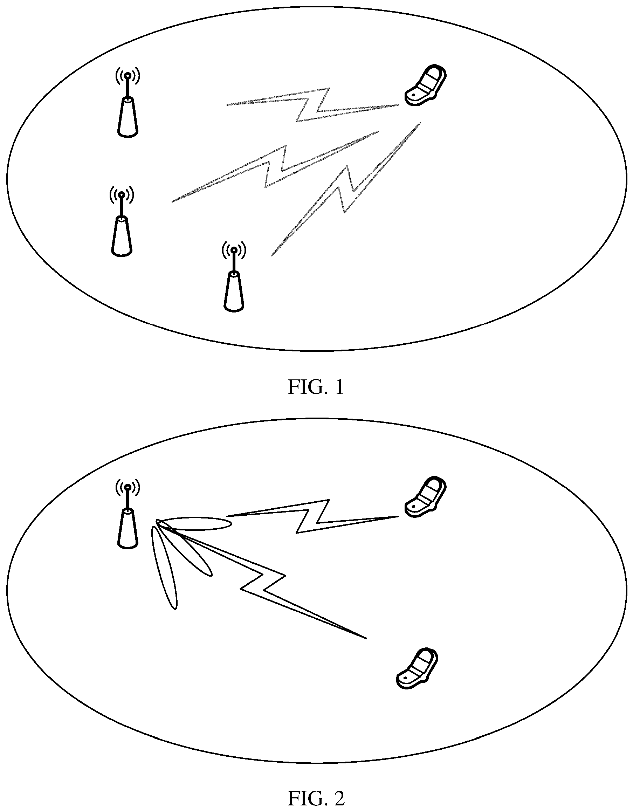

For ease of understanding the embodiments of this application, FIG. 1 and FIG. 2 are schematic diagrams of wireless communications systems applicable to the embodiments of this application. As shown in FIG. 1, the wireless communication system may include one or more network devices. Alternatively, as shown in FIG. 2, the communication system may include one or more terminal devices. A single network device may transmit data or control signaling to a single terminal device or a plurality of terminal devices. Alternatively, a plurality of network devices may simultaneously transmit data or control signaling to a single terminal device. The wireless communication system may support coordinated multipoint transmission (coordinated multiple points transmission, CoMP). In other words, a plurality of cells or a plurality of network devices may coordinately participate in data transmission with one terminal device or jointly receive data sent by one terminal device, or a plurality of cells or a plurality of network devices may perform coordinated scheduling or coordinated beamforming. The plurality of cells may belong to a same network device or different network devices, and may be selected based on a channel gain, a path loss, received signal strength, a received signal instruction, or the like.

It should be understood that the network device in the wireless communications system may be any device with a wireless transceiver function or a chip that may be disposed on the device. The device includes but is not limited to a base station, an evolved NodeB (evolved nodeB, eNB), a home base station, an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system. The network device or may be a gNB in a new radio (NR) system, or may be a component or a part of a device constituting a base station, such as a central unit (central unit, CU), a distributed unit (distributed unit, DU), or a baseband unit (baseband unit, BBU). It should be understood that a specific technology used by and a specific device form of a radio access network device are not limited in the embodiments of this application. In this application, the radio access network device is referred to as a network device for short. Unless otherwise specified, in this application, all network devices are radio access network devices. In this application, the network device may be a network device itself, or may be a chip used in the network device to complete a wireless communication processing function.

In some deployments, the gNB may include a CU and a DU. The gNB may further include a radio unit (radio unit, RU). The CU implements some functions of the gNB, and the DU implements some functions of the gNB. For example, the CU implements functions at a radio resource control (radio resource control, RRC) layer and a packet data convergence protocol (packet data convergence protocol, PDCP) layer. The DU implements functions at a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling such as RRC layer signaling or PHCP layer signaling may also be considered as being sent by the DU, or being sent by the DU and the RU. It may be understood that the network device may be a CU node, a DU node, or a device including the CU node and the DU node. In addition, the CU may serve as a network device in an access network RAN, or the CU may serve as a network device in a core network CN. This is not limited herein.

It should be further understood that the terminal device in the wireless communication system may also be referred to as a terminal, user equipment (user equipment, UE), a mobile station (mobile station, MS), a mobile terminal (mobile terminal, MT), or the like. The terminal device in the embodiments of this application may be a mobile phone (mobile phone), a tablet computer (Pad), or a computer that has a wireless transceiver function, or may be a wireless terminal used in scenarios such as virtual reality (virtual reality, VR), augmented reality (augmented reality, AR), industrial control (industrial control), self driving (self driving), telemedicine (remote medical), a smart grid (smart grid), transportation safety (transportation safety), a smart city (smart city), and a smart home (smart home). In this application, the foregoing terminal device and a chip that can be used in the foregoing terminal device are collectively referred to as a terminal device. It should be understood that a specific technology used by and a specific device form of the terminal device are not limited in the embodiments of this application.

It should be understood that FIG. 1 or FIG. 2 schematically shows the network device and the terminal device for ease of understanding. However, this should not constitute any limitation on this application. The wireless communication system may further include more or fewer network devices, or may include more terminal devices. Network devices that communicate with different terminal devices may be a same network device, or may be different network devices. Quantities of network devices that communicate with different terminal devices may be the same or may be different. This application is not limited thereto.

With reference to the wireless communications system shown in FIG. 1 or FIG. 2, the following briefly describes a communication process between the network device and the terminal device.

The communication process between the network device and the terminal device is based on a channel. Physical layer channels are basically classified into a data channel and a control channel. The channels may be alternatively classified into an uplink channel and a downlink channel based on different transmission directions. Reliable uplink and downlink data transmission requires uplink and downlink control channels. A physical downlink control channel (physical downlink control channel, PDCCH) carries control information for parsing a physical downlink shared channel (physical downlink shared channel, PDSCH) and authorizing a physical uplink shared channel (physical uplink shared channel, PUSCH). The terminal device can correctly parse the PDSCH and send the PUSCH only after correctly parsing the control information. A physical uplink control channel (physical uplink control channel, PUCCH) carries control information such as uplink sending scheduling request information, hybrid automatic repeat request acknowledgment/negative acknowledgment (acknowledgment/negative acknowledgement, ACK/NACK) feedback information of a PDSCH channel, and a channel quality indicator (channel quality information, CQI) feedback of a downlink radio channel. This application mainly relates to a PDSCH control channel and a PDCCH control channel, which are also sometimes referred to as a PDSCH and a PDCCH for short herein.

The PDCCH control channel carries downlink control information, and the control information exists in a form of a downlink control information (downlink control information, DCI) format. The downlink control information is sent in the DCI format. A resource allocation unit of the PDCCH is a control channel element (control-channel element, CCE). A PDCCH may include 1, 2, 4, 8, and 16 CCEs. A specific quantity of CCEs is determined by a DCI payload size (DCI payload size) and a required coding rate. A quantity of CCEs constituting the PDCCH is also referred to as an aggregation level (aggregation level, AL). The PDCCH is transmitted in a control-resource set (control-resource set, CORESET). The CORESET includes a plurality of physical resource blocks (physical resource blocks, PRBs) in frequency domain and one to three OFDM symbols in time domain, and may be located at any location in a slot (slot). A PRB is a unit of uplink and downlink frequency domain resources, and each PRB includes 12 consecutive subcarriers in frequency domain. In an NR system, one subcarrier is a basic unit in frequency domain, and a subcarrier spacing (subcarrier spacing, SCS) may be 15 kHz, 30 kHz, or the like.

In the PDCCH, a radio network temporary identifier (radio network temporary identifier, RNTI) is a unique identifier of different services of the terminal device, and a value of the RNTI is predefined by a standard or configured by higher layer signaling. Different RNTI values distinguish different DCI functions, for downlink addressing to find corresponding terminal devices. In order that the terminal device can identify and parse information about the terminal device, the network device conceals an ID, namely, an RNTI of the terminal device in the channel, that is, scrambles a cyclic redundancy check (cyclic redundancy check, CRC) of DCI by using the RNTI. The terminal parses the DCI and extracts the RNTI, to determine whether the RNTI belongs to the terminal. Different services use different types of scrambling codes of the terminal, and DCI scrambled by different RNTI values indicates scheduling information of different data types of PDSCHs. For example, DCI scrambled by an SI-RNTI is used to schedule a PDSCH carrying system information, and DCI scrambled by a C-RNTI is used to schedule a physical downlink shared channel dedicated to the terminal device.

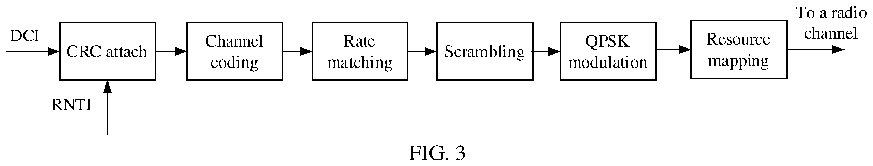

The DCI is generated at a medium access control (media access control, MAC) layer and enters a processing process at a physical layer through a logical channel. A baseband transmission process of the PDCCH may be divided into three levels: a bit level, a symbol level, and a sample level. The PDCCH bit level includes an additional CRC, convolutional coding, rate matching, scrambling, and mapping, and mainly implements coding of the DCI. The symbol level includes resource mapping, and mainly completes conversion from a bit sequence to a modulation symbol sequence and mapping from a modulation symbol sequence to an antenna. The sample level completes conversion of a signal from the frequency domain to the time domain, and forms an orthogonal frequency division multiplexing (orthogonal frequency division multiplexing, OFDM) symbol and completes adding of a PDCCH. The following describes in detail a transmission and processing procedure of the PDCCH shown in FIG. 3. A CRC generated based on each DCI payload (DCI payload) is attached after the DCI payload, and an RNTI is scrambled on the CRC. DCI with different purposes (for example, a data transmission scheduling indication, a slot format indication, a transmission interruption indication, and a power control command) uses different RNTIs. Channel coding is performed on information bits after the CRC to which the scrambled RNTI is attached, and rate matching is performed on the coded bit sequence, so that the bit sequence output after the rate matching matches resources occupied by the PDCCH. The bit sequence after the rate matching is scrambled by a scrambling code sequence, undergoes quadrature phase shift keying (quadrature phase shift keying, QPSK) modulation, and is finally mapped to resource elements (resource elements, REs). An RE is a minimum physical resource, and includes one subcarrier in one OFDM symbol. A basic time unit for downlink resource scheduling in NR is a slot (slot). Usually, a slot includes 14 OFDM symbols in time. In the time domain, transmission in NR is organized into frames (frames) with a time length of 10 ms, each frame is divided into 10 subframes (subframes) with a same size length of 1 ms, and each subframe may include one or more slots (which is determined based on a subcarrier spacing, where when a subcarrier is 15 kHz, each subframe includes one slot).

It should be noted that, a scrambling code sequence is used to scramble a bit sequence obtained by performing rate matching on the DCI. The scrambling code sequence may be a gold sequence whose length is 31 bits, and an initialization generation formula of the scrambling code sequence Cᵢₙᵢₜ may be: ${c}_{init} = \left({n}_{RNTI}⋅{2}^{16}+{n}_{ID}\right) mod {2}^{31} .$

If the PDCCH is transmitted in a UE-specific search space set (UE-specific search space set, USS set), a control-resource set (control-resource set, CORESET) in which the PDCCH is located is configured with a high-layer parameter pdcch-DMRS-ScramblingID (referred to as *n_{PDCCH-DMRS-ID}* below). The parameter is a scrambling ID of a demodulation reference signal (demodulation reference signal, DMRS) of the PDCCH, a value of *n_{ID}* is equal to the parameter *n_{PDCCH-DMRS-ID}, n_{RNTI}* is a value *n_{C-RNTI}* of the C-RNTI, and the initialization formula of the scrambling sequence is: ${c}_{init} = \left({n}_{C - RNTI}⋅{2}^{16}+{n}_{PDCCH - DMRS - ID}\right) mod {2}^{31} .$

However, if the PDCCH is transmitted in a common search space set (common search space set, CSS set), or the CORESET in which the PDCCH is located is not configured with the higher layer parameter pdcch-DMRS-ScramblingID, a value of *n_{ID}* is equal to a cell ID ${N}_{ID}^{cell}$, and *n_{RNTI}* is equal to 0, and the initialization formula of the scrambling code sequence is: ${c}_{init} = \left({N}_{ID}^{cell}\right) mod {2}^{31} .$

It can be learned from the formula that a value of the scrambling code sequence of the PDCCH is related to the C-RNTI, the scrambling ID of the DMRS of the PDCCH, or the cell ID.

Usually, the value of the scrambling code sequence of the PDCCH can meet requirements of most PDCCHs for a block error ratio, but cannot meet requirements of some PDCCHs that require relatively high detection performance. For example, a power saving signal/channel (power saving signal/channel), referred to as a power saving signal below, has a high detection performance requirement. A power saving physical downlink control channel (power saving PDCCH) transmitted outside on duration requires a BLER (block error ratio, block error ratio) to be 0.1%, and BLERs of other PDCCHs are required to be 1%. Therefore, the existing PDCCH scrambling method cannot meet the requirements of the PDCCHs that require relatively high detection performance. To clarify this technical problem, the following describes PDCCH receiving and the power saving signal.

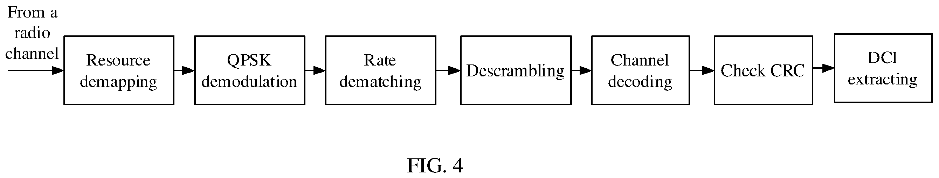

FIG. 4 is a schematic diagram of receiving and detection of a PDCCH. The terminal device performs resource demapping, QPSK demodulation, and PDCCH blind detection on a signal received from a radio channel. The PDCCH blind detection may include rate dematching, descrambling, channel decoding, check CRC, and finally DCI extracting. A bit level detection process of the PDCCH is referred to as a blind detection process because the terminal device does not know information such as resources specifically occupied by the PDCCH and a DCI format. The terminal device knows only a state of the terminal device and control information that the terminal device requires. Therefore, the terminal device can only try to parse the PDCCH based on the information only available to the terminal device. This tentative detection process is referred to as blind detection.

In NR, to better control complexity of blind detection of a downlink control channel, the network device may configure one or more search space sets (search space sets) for the terminal device. The search space set is a set of search spaces. The search space (search space) is a set of candidate PDCCHs at an aggregation level (aggregation level, AL), and the aggregation level is a quantity of CCEs constituting a PDCCH. For example, a PDCCH may include 1, 2, 4, 8 and 16 CCEs. A specific quantity of CCEs is determined by a DCI payload size (DCI payload size) and a required coding rate. Because an aggregation level of a PDCCH actually sent by a network device changes with time, and because there is no related signaling used to notify the terminal device, the terminal device needs to blindly detect a PDCCH at different aggregation levels, and the PDCCH that is to be blindly detected is referred to as a candidate PDCCH. There may be a plurality of candidate PDCCHs at one aggregation level. The terminal device decodes, in the search space, all candidate PDCCHs including CCEs. If CRC check succeeds, the terminal device considers that content of the decoded PDCCHs is valid for the terminal device, and processes related information obtained through decoding.

The search space sets may be classified into a CSS set and a USS set. A PDCCH in the CSS set is mainly used to instruct to receive a system message, a random access response, a paging message, and the like. A PDCCH in the USS set is used to schedule dedicated uplink/downlink data for UE.

Usually, a packet-based data stream is bursty, and there is data transmitted in a time period, but there is no data transmitted in a next relatively long time period. Therefore, in NR, a discontinuous reception (discontinuous reception, DRX) processing procedure may be configured for a terminal device. When there is no data transmitted, the terminal device may be enabled to stop detecting a PDCCH and stop receiving corresponding transmitted data, to reduce power consumption and increase a battery lifespan.

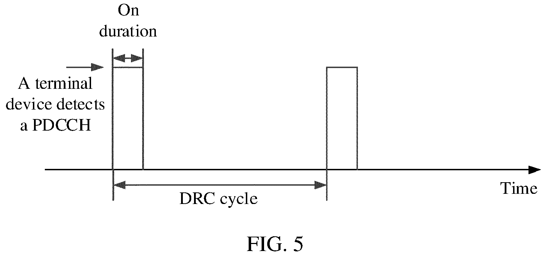

In the DRX, a base station may configure a DRX cycle (DRX cycle) for a terminal device in a radio resource control connected (radio resource control connected, RRC_CONNECTED) state. The DRX cycle includes a time region of on duration (on duration). In the RRC_CONNECTED state, the terminal device has established a radio resource control (radio resource control, RRC) context. That is, parameters necessary for communication between the terminal device and the radio access network are known to both. The RRC_CONNECTED state is mainly used to transmit data to the terminal device or receive data from the terminal device. With reference to a schematic diagram of a DRX cycle shown in FIG. 5, the following describes an example for detecting a PDCCH in the DRX on duration. The terminal device may detect a PDCCH in the on duration. The terminal device starts a timer at a time start location of each DRX cycle (namely, a time start location of on duration). Duration of the timer is duration of the on duration. The timer may be referred to as a drx-onDurationTimer or an on duration timer (a range is 1 ms to 1200 ms). The terminal device detects a PDCCH within the time range of the timer. If the terminal device detects no PDCCH within the time range of the timer, after the timer expires, the terminal device enters a sleep state. That is, the terminal device may disable a receiving circuit in a remaining time period of the DRX cycle, to reduce power consumption of the terminal. If the terminal device detects the PDCCH within the time range of the on duration timer, the terminal device starts an inactivity timer (also referred to as drx-InactivityTimer) in a DRX mechanism. If the terminal device still detects the PDCCH within running time of the inactivity timer, the terminal device resets the inactivity timer and restarts counting. If the inactivity timer is running, the terminal device still needs to continue to detect the PDCCH until the inactivity timer expires even if the originally configured on duration timer expires (that is, the on duration ends). It should be noted that, the on duration timer and the inactivity timer are not the only conditions for the terminal device to detect the PDCCH, and a condition that can trigger the terminal device to be in active time (active time) may be used. The active time is the time for the terminal device to detect the PDCCH. For example, in the DRX mechanism, there is also another timer such as a DRX downlink/uplink retransmission timer (referred to as drx-RetransmissionTimerDL or drx-RetransmissionTimerUL). When the DRX downlink/uplink retransmission timer is running, the terminal device is also in the active time.

In NR, the terminal device works in a larger radio frequency and a larger baseband bandwidth. However, in one DRX cycle, the terminal device needs to first wake up from a sleep state, enable radio frequency and baseband circuits, achieve time-frequency synchronization, and then detect a PDCCH within on duration. These processes consume a large amount of power. However, data transmission is usually bursty and sparse in terms of time. If the network device does not perform data scheduling for the terminal device in the on duration, unnecessary energy consumption is caused for the terminal device. Therefore, to reduce power consumption, a power saving signal may be introduced into NR. The following describes a function of the power saving signal by using two types of power saving signals as examples.

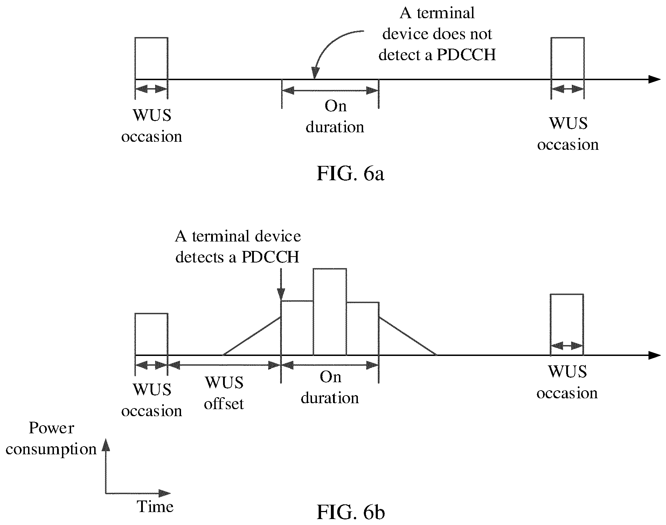

A working principle of a first power saving signal is described with reference to FIG. 6. The first power saving signal may be a wake up signal (Wake up signal, WUS). For a terminal device supporting the WUS, a corresponding WUS occasion (a WUS moment) is before a start location of on duration of each DRX cycle. The WUS occasion may be understood as a subframe or a slot in which the WUS is located. The network device may send the WUS to the terminal device in a form of discontinuous transmission (discontinuous transmission, DTX) on the WUS occasion. To be specific, the network device determines, based on a requirement for data scheduling, whether to send the WUS on the WUS occasion, and the terminal device needs to perform detection on the WUS on the WUS occasion to determine whether the network device sends the WUS. When the terminal device is in sleep, the terminal device may be in a state with extremely low power consumption (for example, only some modem functions are enabled or a simple receiving circuit is used) to detect and demodulate the WUS. As shown in FIG. 6a, when the terminal device detects no WUS on the WUS occasion or a detected WUS indicates that the terminal device has no data scheduled in corresponding on duration, the terminal device may directly enter the sleep state, and does not need to detect the PDCCH in the on duration. As shown in FIG. 6b, if the terminal device detects a WUS on a WUS occasion or a detected WUS indicates that the terminal device has data scheduled in corresponding on duration, the terminal device starts in a WUS offset period. That is, the terminal device wakes up from the sleep state, enables the radio frequency and baseband circuits, and achieves time-frequency synchronization. That is, in this case, the terminal device may start a timer based on the DRX mechanism procedure described above, detect the PDCCH, and perform data and control channel processing in the on duration. In FIG. 6a and FIG. 6b, a horizontal axis represents time, and a vertical axis represents power consumption. It can be learned from FIG. 6a and FIG. 6b that power consumption of the terminal device is reduced by introducing the WUS signal.

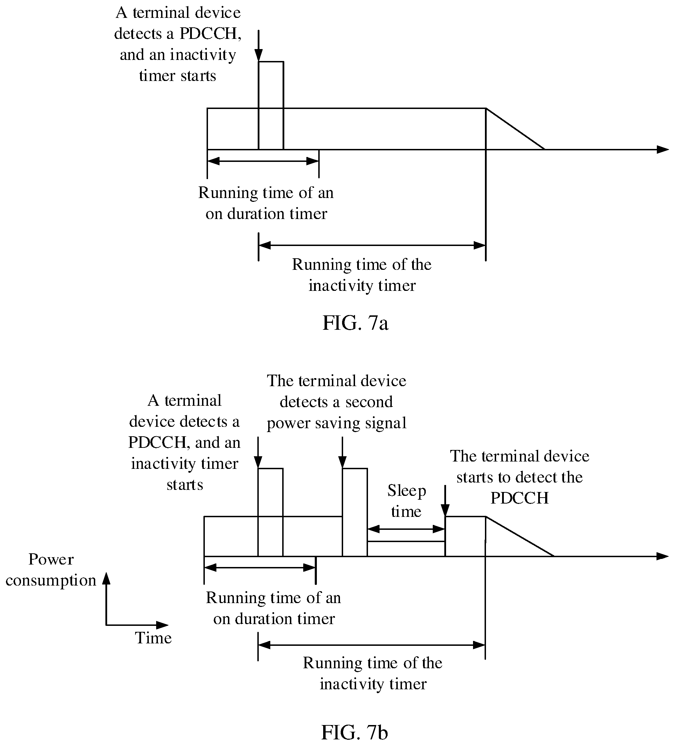

As described above, in the DRX mechanism, as shown in FIG. 7a, if the terminal device detects the PDCCH within running time of an on duration timer, the terminal device starts an inactivity timer. In consideration of a latency requirement for data scheduling, running time of the inactivity timer is generally much longer than the running time of the on duration timer. When the network device performs data scheduling for the terminal device once, the terminal device starts/resets the inactivity timer, and continues to detect the PDCCH in a very long period of time. The network device may not schedule any data for the terminal device in this period of time. The following describes a working principle of another power saving signal with reference to FIG. 7b. To distinguish from the first power saving signal (WUS) in FIG. 6, the power saving signal in FIG. 7a and FIG. 7b is referred to as a second power saving signal herein. As shown in FIG. 7b, within the running time (or active time) of the on duration timer or the inactivity timer of the terminal device, the network device sends the second power saving signal to the terminal device in a form of DTX. That is, the network device determines, based on a data scheduling requirement, whether to send the second power saving signal, and the terminal device needs to determine, by detecting the second power saving signal, whether the network device sends the second power saving signal. A function of the second power saving signal transmitted within the on duration may be indicating one or more of the following information (which may be referred to as "power saving information"): that the terminal device needs to detect a CORESET or a search space set of the PDCCH, a cycle for detecting a search space set by the terminal device, that the terminal device stops detecting the PDCCH for a period of time, and a quantity of receive antennas or a quantity of MIMO layers of the terminal device. The following uses an example in which the second power saving signal indicates the terminal device to stop detecting the PDCCH for a period of time for description.

The second power saving signal may indicate the terminal device to stop detecting the PDCCH for a period of time T. The time T may be referred to as skipping duration (skipping duration). As shown in FIG. 7b, if the network device determines that no data needs to be scheduled to the terminal device and no scheduling PDCCH needs to be sent within a period of continuous time T after an occasion of the second power saving signal, the network device may send the corresponding second power saving signal to the terminal device. If the terminal device detects the second power saving signal on the occasion of the second power saving signal or the detected second power saving signal indicates that the terminal device has no data scheduled in the corresponding skipping duration, the terminal device may not detect the PDCCH in the skipping duration. However, the terminal device may wake up to detect the second power saving signal or the PDCCH after the period of time T. If the terminal device does not detect the second power saving signal on the occasion of the second power saving signal or the detected second power saving signal indicates that the terminal device has data scheduled in the corresponding skipping duration, the terminal device continues to detect the PDCCH. It can be learned by comparing FIG. 7a and FIG. 7b that, in this manner, in a scenario in which the terminal device starts/resets the inactivity timer, and continues to detect the PDCCH in a long period of time, and the network device may not schedule any data to the terminal device in this period of time. In this way, unnecessary power consumption of the terminal device can be reduced by introducing the second power saving signal.

It can be learned from the foregoing analysis that the power saving PDCCH requires relatively high detection performance, but another type of PDCCH (for example, a PDCCH for scheduling a system message and a PDCCH for scheduling a terminal device-specific data channel) may be transmitted in a CORESET in which the power saving PDCCH is located. In addition, scrambling code initialization parameters are completely the same. The terminal device cannot distinguish between the power saving PDCCH and the another type of PDCCH by using a PDCCH scrambling code, and is prone to be interfered with by another type of PDCCH. This is not conducive to improvement of detection performance of the power saving PDCCH. In addition, terminal devices that need to receive the power saving PDCCH may also exist in two or more neighboring cells. At least when detecting a power saving PDCCH transmitted in a USS set, the terminal device may be interfered with by a power saving PDCCH sent by a neighboring cell. To resolve the foregoing technical problem, this application provides a data processing method, to improve detection performance of the power saving PDCCH.

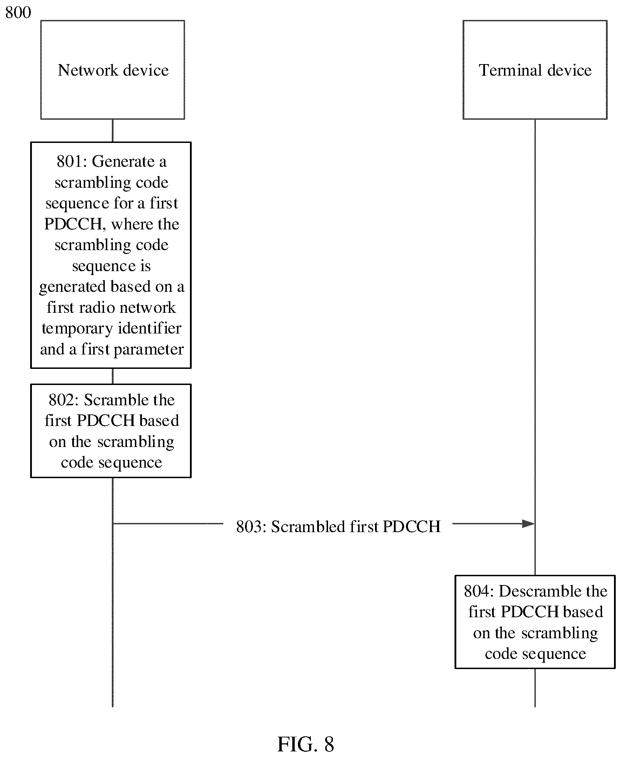

FIG. 8 is a schematic flowchart of a data processing method 800 according to an embodiment of this application.

As shown in FIG. 8, the data processing method 800 may include the following steps.

801: A network device generates a scrambling code sequence for a first PDCCH.

The first PDCCH is used to carry power saving information. In some scenarios, the first PDCCH may be referred to as a power saving PDCCH. The scrambling code sequence is generated based on a first radio network temporary identifier and a first parameter. The first parameter includes at least one of a physical cell identifier, a cell radio network temporary identifier, and a first scrambling parameter. The first radio network temporary identifier is specific to a PDCCH carrying power saving information. The first scrambling parameter is a scrambling parameter of a demodulation reference signal of a physical downlink control channel in a control-resource set CORESET in which the first PDCCH is located.

The following describes "the first radio network temporary identifier is specific to a PDCCH carrying power saving information". As describe above, in the PDCCH, a radio network temporary identifier (radio network temporary identifier, RNTI) is a unique identifier of different services of a terminal device, and a value of the RNTI is predefined by a standard or configured by higher layer signaling. Different RNTI values distinguish different DCI functions, for downlink addressing to find corresponding terminal devices. In order that the terminal device can identify and parse information about the terminal device, the network device conceals an ID, namely, an RNTI of the terminal device in the channel, that is, scrambles a cyclic redundancy check (cyclic redundancy check, CRC) of DCI by using the RNTI. The terminal parses the DCI and extracts the RNTI, to determine whether the RNTI belongs to the terminal. Different services use different types of scrambling codes of the terminal, and DCI scrambled by different RNTI values indicates scheduling information of different data types of PDSCHs. For example, DCI scrambled by an SI-RNTI is used to schedule a PDSCH carrying system information, and DCI scrambled by a C-RNTI is used to schedule a physical downlink shared channel dedicated to the terminal device. For a PDCCH-based power saving signal, a new RNTI may be introduced into NR to scramble CRC of power saving downlink control information (power saving DCI). For example, the new RNTI may be referred to as a first RNTI or PS-RNTI (power saving-radio network temporary identifier). The first RNTI being dedicated to a PDCCH carrying power saving information may be understood as: The first RNTI is different from another RNTI.

802: The network device scrambles the first PDCCH based on the scrambling code sequence.

The network device may generate an initial value of the scrambling sequence based on the first radio network temporary identifier and the first parameter. The first parameter includes at least one of the physical cell identifier, the cell radio network temporary identifier, and the first scrambling parameter. The network device generates the scrambling sequence based on the initial value of the scrambling sequence, and then scrambles the first PDCCH based on the obtained scrambling sequence.

803: The network device sends the scrambled first PDCCH, and the terminal receives the first PDCCH sent by the network device.

804: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 801.

It can be learned from the embodiment corresponding to FIG. 8 that the network device generates, based on the first radio network temporary identifier and the first parameter, the scrambling code sequence for the first PDCCH carrying the power saving information, and the terminal device descrambles the first PDCCH based on the scrambling code sequence. A parameter used to generate the scrambling code sequence of the first PDCCH is different from a parameter used to generate another type of PDCCH. In other words, the scrambling code sequence used by the first PDCCH is different from a scrambling code sequence used by another type of PDCCH, or the scrambling code sequence of the first PDCCH is less related to a scrambling code sequence used by another PDCCH, so that the terminal device is not susceptible to interference from another type of PDCCH. The terminal device descrambles the first PDCCH based on the scrambling code sequence described above, to reduce a block error ratio of the first PDCCH and improve detection performance of the first PDCCH.

It can be learned from the embodiment corresponding to FIG. 8 that the scrambling sequence is generated based on the first radio network temporary identifier and the first parameter. The first parameter includes at least one of the physical cell identifier, the cell radio network temporary identifier, and the first scrambling parameter. The following describes a specific form in which the network device generates the scrambling code sequence for the first PDCCH.

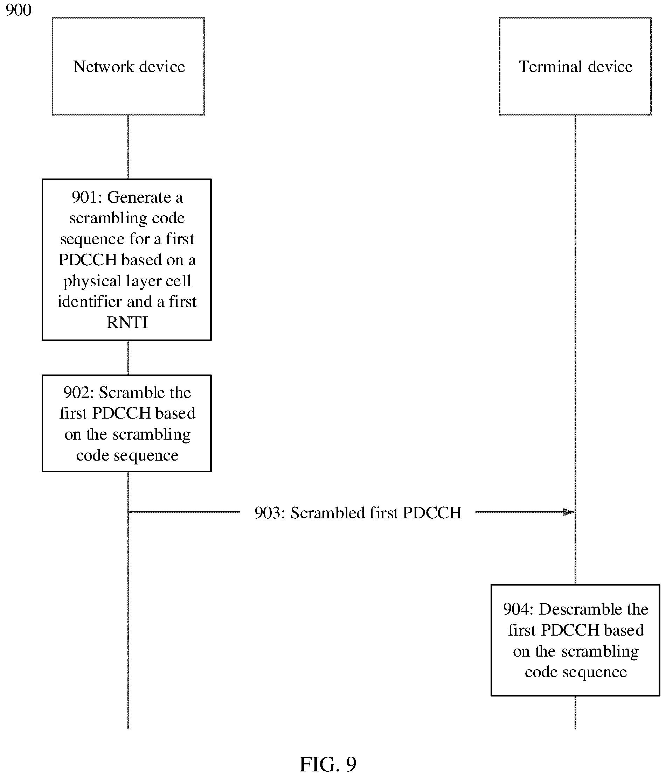

FIG. 9 is a schematic flowchart of a data processing method 900 according to an embodiment of this application.

As shown in FIG. 9, the data processing method 900 may include the following steps.

901: A network device generates a scrambling code sequence for a first PDCCH based on a physical cell identifier and a first RNTI.

In a specific implementation, the network device generates the scrambling code sequence for the first PDCCH based on ${N}_{ID}^{cell} ⋅ {2}^{n} + {n}_{PS - RNTI}$, where
${N}_{ID}^{cell}$ is the physical cell identifier, *n_{PS-RNTI}* is the first radio network temporary identifier, $n \geq \left|{log}_{2}\left({n}_{PS - RNTI}^{max}\right)\right|$, n is a positive integer, and ${n}_{PS - RNTI}^{max}$ is a maximum value of *n_{PS-RNTI}.* For example, the scrambling code sequence of the first PDCCH is initialized by using ${N}_{ID}^{cell}$ and *n_{PS-RNTI}.* Assuming that ${N}_{ID}^{cell}$ is represented by using 10 bits in binary, ${N}_{ID}^{cell}$ is represented as "*c*₀*c*₁ ... *c*₉" in binary. Assuming that *n_{PS-RNTI}* is represented by using 16 bits in binary, n is 16, and *n_{PS-RNTI}* is represented as *" p*₀*p*₁ ... *p*₁₅" in binary. An initialization formula of the scrambling code sequence of the first PDCCH is: ${c}_{init} = \left({N}_{ID}^{cell}⋅{2}^{16}+{n}_{PS - RNTI}\right) mod {2}^{31} ,$ where
${N}_{ID}^{cell} ⋅ {2}^{16} + {n}_{PS - RNTI}$ is represented as " *c*₀*c*₁ ..*. c*₉*p*₀*p*₁ ... *p*₁₅" in binary. It can be learned that bit information of ${N}_{ID}^{cell}$ is located at most significant bits of a calculation result of the initialization formula of the scrambling code sequence. All bit information of ${N}_{ID}^{cell}$ and *n_{PS-RNTI}* is reserved. That is, all the bit information of ${N}_{ID}^{cell}$ and *n_{PS-RNTI}* can be used, and does not overlap that in a scrambling code sequence of another PDCCH. This reduces interference from the another PDCCH.

In a specific implementation, the network device may further generate the scrambling code sequence for the first PDCCH based on ${n}_{PS - RNTI} ⋅ {2}^{m} + {N}_{ID}^{cell}$, where ${N}_{ID}^{cell}$ is the physical cell identifier, *n_{PS-RNTI}* is the first radio network temporary identifier, $m \geq \left|{log}_{2}\left({N}_{ID , max}^{cell}\right)\right|$, m is a positive integer, and ${N}_{ID , max}^{cell}$ is a maximum value of ${N}_{ID}^{cell}$. In a specific embodiment, a range of m may be 10≤*m*≤15. For example, the scrambling code sequence of the first PDCCH is initialized by using ${N}_{ID}^{cell}$ and *n_{PS-RNTI}.* Usually, a quantity of bits of the physical cell identifier is 10. If m is 10, the initialization formula of the scrambling code sequence of the first PDCCH is:
${c}_{init} = \left({n}_{PS - RNTI}⋅{2}^{10}+{N}_{ID}^{cell}\right) mod {2}^{31}$, where ${n}_{PS - RNTI} ⋅ {2}^{m} + {N}_{ID}^{cell}$ is represented as "*p*₀*p*₁ ... *p*₁₅*c*₀*c*₁ ... *c*₉" in binary.

If m is 11, the initialization formula of the scrambling code sequence of the first PDCCH is:
${c}_{init} = \left({n}_{PS - RNTI}⋅{2}^{11}+{N}_{ID}^{cell}\right) mod {2}^{31}$, where ${n}_{PS - RNTI} ⋅ {2}^{m} + {N}_{ID}^{cell}$ is represented as " *p*₀*p*₁ ... *p*₁₅0*c*₀*c*₁... *c*₉" in binary.

If m is 12, the initialization formula of the scrambling code sequence of the first PDCCH is:
${c}_{init} = \left({n}_{PS - RNTI}⋅{2}^{12}+{N}_{ID}^{cell}\right) mod {2}^{31}$, where ${n}_{PS - RNTI} ⋅ {2}^{m} + {N}_{ID}^{cell}$ is represented as " *p*₀*p*₁ ... *p*₁₅00*c*₀*c*₁ ... *c*₉" in binary.

If m is 13, the initialization formula of the scrambling code sequence of the first PDCCH is:
${c}_{init} = \left({n}_{PS - RNTI}⋅{2}^{13}+{N}_{ID}^{cell}\right) mod {2}^{31}$, where ${n}_{PS - RNTI} ⋅ {2}^{m} + {N}_{ID}^{cell}$ is represented as " *p*₀*p*₁ ... *p*₁₅000*c*₀*c*₁ ... *c*₉" in binary.

If m is 14, the initialization formula of the scrambling code sequence of the first PDCCH is:
${c}_{init} = \left({n}_{PS - RNTI}⋅{2}^{14}+{N}_{ID}^{cell}\right) mod {2}^{31}$, where ${n}_{PS - RNTI} ⋅ {2}^{m} + {N}_{ID}^{cell}$ is represented as" *p*₀*p*₁ ... *p*₁₅0000 *c*₀*c*₁ ... *c*₉" in binary.

If m is 15, the initialization formula of the scrambling code sequence of the first PDCCH is:
${c}_{init} = \left({n}_{PS - RNTI}⋅{2}^{15}+{N}_{ID}^{cell}\right) mod {2}^{31}$, where ${n}_{PS - RNTI} ⋅ {2}^{m} + {N}_{ID}^{cell}$ is represented as " *p*₀*p*₁ ... *p*₁₅00000 *c*₀*c*₁ ... *c*₉" in binary.

If m is 16, the network device generates the scrambling code sequence for the first PDCCH based on ${n}_{PS - RNTI} ⋅ {2}^{16} + {N}_{ID}^{cell}$*.*

It can be learned from the foregoing examples that bit information of *n_{PS-RNTI}* is located at most significant bits of a calculation result of the initialization formula of the scrambling code sequence, and a value of m is not less than 10. All bit information of *n_{PS-RNTI}* and ${N}_{ID}^{cell}$ is reserved. That is, all the bit information of *n_{PS-RNTI}* and ${N}_{ID}^{cell}$ can be used, and does not overlap that in a scrambling code sequence of another PDCCH. This reduces interference from the another PDCCH.

902: The network device scrambles the first PDCCH based on the scrambling code sequence.

The network device scrambles the first PDCCH based on the scrambling code sequence described in step 901.

903: The network device sends the scrambled first PDCCH, and a terminal receives the first PDCCH sent by the network device.

904: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 901.

It can be learned from the embodiment corresponding to FIG. 9 that the network device generates, based on the physical cell identifier and the cell radio network temporary identifier, the scrambling code sequence for the first PDCCH carrying the power saving information, and the terminal device descrambles the first PDCCH based on the scrambling code sequence. In this way, not only the first PDCCH can be distinguished from another type of PDCCH, but interference from a first PDCCH sent by a neighboring cell can be reduced.

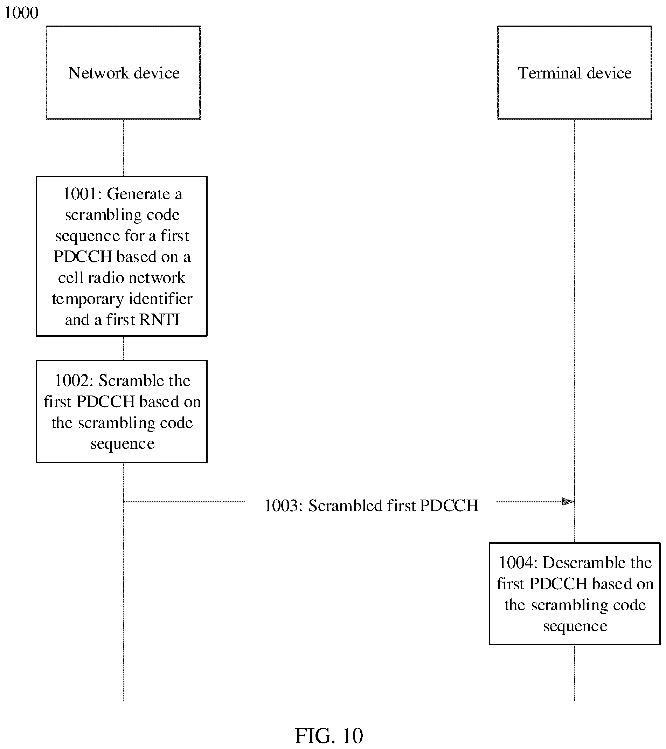

FIG. 10 is a schematic flowchart of a data processing method 1000 according to an embodiment of this application.

As shown in FIG. 10, the data processing method 1000 may include the following steps.

1001: A network device generates a scrambling code sequence for a first PDCCH based on a cell radio network temporary identifier and a first RNTI.

In a specific implementation, the network device generates the scrambling code sequence for the first PDCCH based on *n_{C-RNTI}* · 2*ⁿ* + *n_{PS-RNTI}*, where
*n_{C-RNTI}* is the cell radio network temporary identifier, *n_{PS-RNTI}* is the first radio network temporary identifier, $n \geq \left|{log}_{2}\left({n}_{PS - RNTI}^{max}\right)\right|$, n is a positive integer, and ${n}_{PS - RNTI}^{max}$ is a maximum value of *n_{PS-RNTI}.* For example, the first PDCCH scrambling code sequence is initialized by using *n_{C-RNTI}* and *n_{PS-RNTI}.* Assuming that *n_{C-RNTI}* is represented by using 16 bits in binary, *n_{C-RNTI}* is represented as " *c*₀*c*₁ ... *c*₁₅ " in binary. It should be noted that a largest quantity of bits of *n_{C-RNTI}* configured by the network device may not be 16. Specifically, the largest quantity of bits of *n_{C-RNTI}* needs to be determined based on a configuration of the network device in an actual scenario. Specific values of the largest quantity of bits listed below are not limited. The largest quantity of bits of the first parameter should be determined based on an actual scenario. Details are not described herein again. Assuming that *n_{PS-RNTI}* is represented by using 16 bits in binary, n is 16, and *n_{PS-RNTI}* is represented as *"* p*₀p*₁ ... *p*₁₅" in binary. An initialization formula of the scrambling code sequence of the first PDCCH is: ${c}_{init} = \left({n}_{C - RNTI}⋅{2}^{16}+{n}_{PS - RNTI}\right) mod {2}^{31} ,$ where
*n_{C-RNTI}* · 2*ⁿ + n_{PS-RNTI}* is represented as "*c*₀*c*₁ ... *c*₁₅*p*₀*p*₁ ... *p*₁₅" in binary. It can be learned that bit information of *n_{C-RNTI}* is located at most significant bits of a calculation result of the initialization formula of the scrambling code sequence. All bit information of *n_{C-RNTI}* and *n_{PS-RNTI}* is reserved. That is, all the bit information of *n_{C-RNTI}* and *n_{PS-RNTI}* can be used. Bit information of the C-RNTI and the PS-RNTI configured by the network device is used to reduce a probability of overlapping with a scrambling code sequence of another PDCCH.

In a specific implementation, the network device generates the scrambling code sequence for the first PDCCH based on *n_{PS-RNTI}* · 2*^{p} + n_{C-RNTI}* , where *p ≥* |log₂(*n*_{*C*-*RNTI,*max})|, and p is a positive integer.

*n_{C-RNTI}* is the cell radio network temporary identifier, *n_{PS-RNTI}* is the first radio network temporary identifier, and *n*_{*C-RNTI*,max} is a maximum value of *n_{C-RNTI} .* For example, the scrambling code sequence of the first PDCCH is initialized by using *n_{C-RNTI}* and *n_{PS-RNTI}.* Assuming that *n_{C-RNTI}* is represented by using 16 bits in binary, p is 16, and *n_{C-RNTI}* is represented as " *c*₀*c*₁ ... *c*₁₅*"* in binary. Assuming that *n_{PS-RNTI}* is represented by using 16 bits in binary, and *n_{PS-RNTI}* is represented as " *p*₀*p*₁ ... *p*₁₅" in binary. An initialization formula of the scrambling code sequence of the first PDCCH is: ${c}_{init} = \left({n}_{PS - RNTI}⋅{2}^{16}+{n}_{C - RNTI}\right) mod {2}^{31} ,$ where
*n_{PS-RNTI}·*2*^{p} + n_{C-RNTI}* is represented as " *c*₀*c*₁ ... *c*₁₅*p*₀*p*₁ ... *p*₁₅" in binary. It can be learned that bit information of *n_{PS-RNTI}* is located at most significant bits of a calculation result of the initialization formula of the scrambling code sequence. All bit information of *n_{C-RNTI}* and *n_{PS- RNTI}* is reserved. That is, all the bit information of *n_{C-RNTI}* and *n_{PS-RNTI}* can be used. Bit information of the C-RNTI and the PS-RNTI configured by the network device is used to reduce a probability of overlapping with a scrambling code sequence of another PDCCH.

1002: The network device scrambles the first PDCCH based on the scrambling code sequence.

The network device scrambles the first PDCCH based on the scrambling code sequence described in step 1001.

1003: The network device sends the scrambled first PDCCH, and a terminal receives the first PDCCH sent by the network device.

1004: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 1001.

It can be learned from the embodiment corresponding to FIG. 10 that the network device generates, based on the first radio network temporary identifier and the cell radio network temporary identifier, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH, and reduce interference from a first PDCCH sent by a neighboring cell.

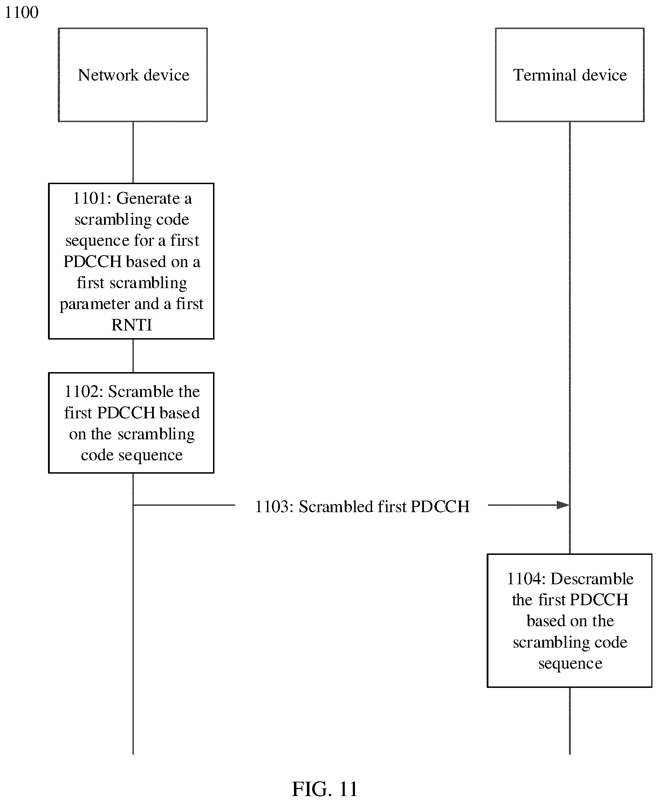

FIG. 11 is a schematic flowchart of a data processing method 1100 according to an embodiment of this application.

As shown in FIG. 11, the data processing method 1100 may include the following steps.

1101: A network device generates a scrambling code sequence for a first PDCCH based on a first scrambling parameter and a first RNTI.

The first scrambling parameter is a scrambling parameter of a demodulation reference signal of a physical downlink control channel in a control-resource set CORESET in which the first PDCCH is located.

In a specific implementation, the network device generates the scrambling code sequence for the first PDCCH based on *n_{PS-RNTI} ·* 2*^{q} + n_{PDCCH -DMRS -ID}*, where
*n_{PDCCH-DMRS-ID}* is the first scrambling parameter, *n_{PS-RNTI}* is the first radio network temporary identifier, $q \geq \left|{log}_{2}\left({n}_{PDCCH - DMRS - ID}^{max}\right)\right|$, q is a positive integer, and ${n}_{PDCCH - DMRS - ID}^{max}$ is a maximum value of *n_{PDCH-DMRS-ID}.* For example, the scrambling code sequence of the first PDCCH is initialized by using *np_{DCCH-DMRS-ID}* and *n_{PS-RNTI}.* Assuming that *np_{DCCH-DMRS-ID}* is represented by using 16 bits in binary, q is 16, and *np_{DCCH-DMRS-ID}* is represented as " *c*₀*c*₁ ... *c*₁₅" in binary. Assuming that *n_{PS-RNTI}* is represented by using 16 bits in binary, *n_{PS-RNTI}* is represented as *" p*₀*p*₁ ... *p*₁₅" in binary. An initialization formula of the scrambling code sequence of the first PDCCH is: ${c}_{init} = \left({n}_{PS - RNTI}⋅{2}^{16}+{n}_{PDCCH - DMRS - ID}\right) mod {2}^{31} ,$ where
*n_{PS-RNTI}* · 2*^{q}* + *n_{PDCCH -DMRS -ID}* is represented as " *c*₀*c*₁ ... *c*₁₅*p*₀*p*₁ ... *p*₁₅" in binary. It can be learned that bit information of *n_{PDCCH-DMRS-ID}* is located at most significant bits of a calculation result of the initialization formula of the scrambling code sequence. All bit information of *n_{PDCCH-DMRS-ID}* and *n_{PS-RNTI}* is reserved. That is, all the bit information of *n_{PDCCH-DMRS-ID}* and *n_{PS-RNTI}* can be used. Bit information of the first scrambling parameter and the PS-RNTI configured by the network device is used to reduce a probability of overlapping with a scrambling code sequence of another PDCCH.

In a specific implementation, the network device generates the scrambling code sequence for the first PDCCH based on *n_{PS-RNTI} ·* 2*^{p} + n_{C-RNTI}* , where *p ≥* |log₂(*n*_{*C-RNTI,*max})|, and p is a positive integer.

*n_{C-RNTI}* is a cell radio network temporary identifier, *n_{PS-RNTI}* is the first radio network temporary identifier, and *n*_{*C-RNTI*,max} is a maximum value of *n_{C-PNTI}*. For example, the scrambling code sequence of the first PDCCH is initialized by using *n_{C-RNTI}* and *n_{PS-RNTI}.* Assuming that *n_{C-RNTI}* is represented by using 16 bits in binary, p is 16, and *n_{C-RNTI}* is represented as "*c*₀*c*₁ ...*c*₁₅" in binary. Assuming that *n_{PS-RNTI}* is represented by using 16 bits in binary, and *n_{PS-RNTI}* is represented as " *p*₀*p*₁ *..*. *p*₁₅" in binary. An initialization formula of the scrambling code sequence of the first PDCCH is: ${c}_{init} = \left({n}_{PS - RNTI}⋅{2}^{16}+{n}_{C - RNTI}\right) mod {2}^{31} ,$ where
*n_{PS-RNTI} ·* 2*^{p} + n_{C-RNTI}* is represented as " *c*₀*c*₁ ... *c*₁₅*p*₀*p*₁ ..*. p*₁₅" in binary. It can be learned that bit information of *n_{PS-RNTI}* is located at most significant bits of a calculation result of the initialization formula of the scrambling code sequence. All bit information of *n_{C-RNTI}* and *n_{PS-RNTI}*is reserved. That is, all the bit information of *n_{C-RNTI}* and *n_{PS-RNTI}* can be used. Bit information of the C-RNTI and the PS-RNTI configured by the network device is used to reduce a probability of overlapping with a scrambling code sequence of another PDCCH.

1102: The network device scrambles the first PDCCH based on the scrambling code sequence.

The network device scrambles the first PDCCH based on the scrambling code sequence described in step 1101.

1103: The network device sends the scrambled first PDCCH, and a terminal receives the first PDCCH sent by the network device.

1104: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 1101.

It can be learned from the embodiment corresponding to FIG. 11 that the network device generates, based on the first radio network temporary identifier and the first scrambling parameter, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH.

It should be noted that, in some scenarios, generation of the scrambling code sequence of the first PDCCH may be simplified. For example, the initialization formula of the scrambling code sequence of the first PDCCH may be *cᵢₙᵢₜ =* (*n_{PDCCH -DMRS-ID}* ) mod 2³¹, or the initialization formula of the scrambling code sequence of the first PDCCH may be *c*ᵢₙᵢₜ *=* (*n_{PS-RNTI}*) mod 2³¹.

It should be further noted that, when the network device determines to send the first PDCCH in a CSS set or in a CORESET in which the first scrambling parameter is not configured, the embodiment corresponding to FIG. 9 may be preferentially performed. When the first PDCCH is transmitted within DRX on duration and in a USS set, if the first scrambling parameter is not configured in the CORESET in which the first PDCCH is located, the embodiment corresponding to FIG. 10 may be preferentially performed. When the network device determines that the first PDCCH is sent in a USS set, and the first parameter is configured in the CORESET in which the first PDCCH is located, the embodiment corresponding to FIG. 11 may be preferentially performed, or the embodiment corresponding to FIG. 9 or FIG. 10 may be performed.

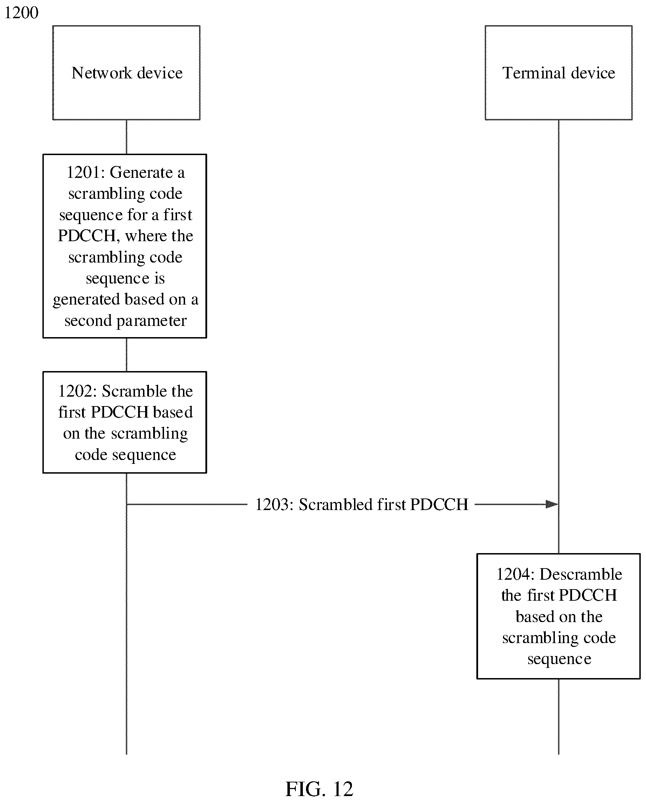

FIG. 12 is a schematic flowchart of a data processing method 1200 according to an embodiment of this application.

As shown in FIG. 12, the data processing method 1200 may include the following steps.

1201: A network device generates a scrambling code sequence for a first PDCCH.

The first PDCCH is used to carry power saving information. In some scenarios, the first PDCCH may be referred to as a power saving PDCCH. The scrambling code sequence is generated based on a second scrambling parameter, the second scrambling parameter is used to scramble a demodulation reference signal DMRS of the first PDCCH, and the second scrambling parameter is specific to a PDCCH carrying power saving information.

The following describes "the second scrambling parameter is specific to a PDCCH carrying power saving information". To improve demodulation and detection performance of the DMRS of the first PDCCH, the network device may introduce an initialization parameter (which is referred to as the second scrambling parameter in this specification) of the DMRS of the first PDCCH. The second scrambling parameter may be understood as being specific to a PDCCH carrying power saving information. The second scrambling parameter is different from a scrambling parameter of a DMRS of another type of PDCCH (including a PDCCH in the NR release 15).

1202: The network device scrambles the first PDCCH based on the scrambling code sequence.

1203: The network device sends the scrambled first PDCCH, and a terminal receives the first PDCCH sent by the network device.

1204: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 1201.

It can be learned from the embodiment corresponding to FIG. 12 that the network device generates, based on the second scrambling parameter, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH.

It can be learned from the embodiment corresponding to FIG. 12 that the scrambling code sequence is generated based on the second scrambling parameter. For example, in a specific implementation, the initialization formula of the scrambling code sequence of the first PDCCH may be *c*ᵢₙᵢₜ *=* (*n_{PowerSaving-DMRS-ID}*)|mod 2³¹. It should be noted that the scrambling code sequence is generated based on the second scrambling parameter, but is not limited to being generated only based on the second scrambling parameter. The following describes several possible cases in which the network device generates the scrambling code sequence for the first PDCCH based on the second scrambling parameter.

It should be noted that the embodiment corresponding to FIG. 12 may be applicable to a scenario in which the network device determines to send the first PDCCH in the CSS set, or may be applicable to the scenario in which the network device determines to send the first PDCCH in the USS set.

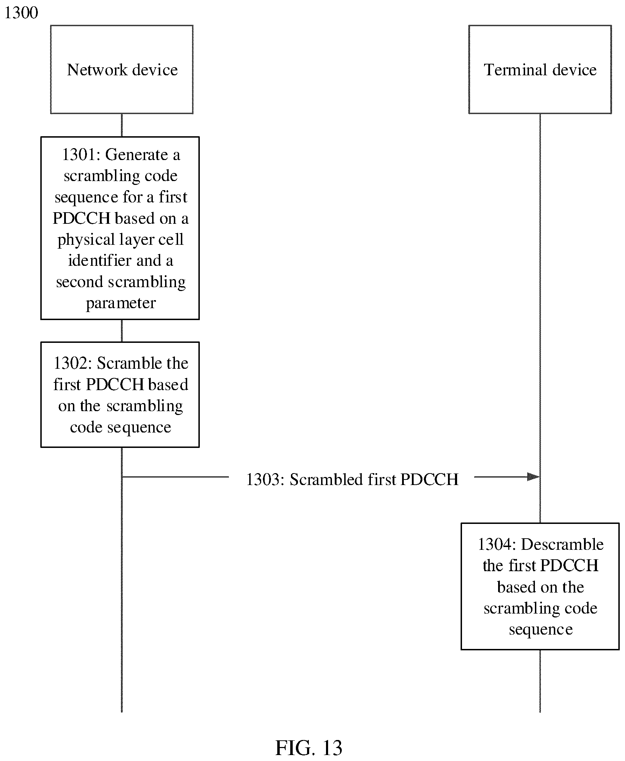

FIG. 13 is a schematic flowchart of a data processing method 1300 according to an embodiment of this application.

As shown in FIG. 13, the data processing method 1300 may include the following steps.

1301: A network device generates a scrambling code sequence for a first PDCCH based on a physical cell identifier and a second scrambling parameter.

In a specific implementation, the network device generates the scrambling code sequence for the first PDCCH based on ${N}_{ID}^{cell} ⋅ {2}^{x} + {n}_{PowerSaving - DMRS - ID}$, where
${N}_{ID}^{cell}$ is the physical cell identifier, *n_{PowerSaving-DMRS-ID}* is the second scrambling parameter, $x \geq \left|{log}_{2}\left({n}_{PowerSaving - DMRS - ID}^{max}\right)\right|$, x is a positive integer, and ${n}_{PowerSaving - DMRS - ID}^{max}$ is a maximum value of *n_{PowerSaving-DMRS-ID}.* For example, the scrambling code sequence of the first PDCCH is initialized by using ${N}_{ID}^{cell}$ and *n_{PowerSaving-DMRS-ID}*. Assuming that ${N}_{ID}^{cell}$ is represented by using 10 bits in binary, ${N}_{ID}^{cell}$ is represented as " *c*₀*c*₁ ... *c*₉" in binary. Assuming that *n_{PowerSaving-DMRS-ID}* is represented by using 16 bits in binary, x is 16, and *n_{PowerSaving-DMRS-ID}* is represented as " *p*₀*p*₁ ... *p*₁₅ " in binary. It should be noted that a largest quantity of bits of *n_{PowerSaving-DMRS-ID}* configured by the network device may not be 16. Specifically, the largest quantity of bits of *n_{PowerSaving-DMRS-ID}* needs to be determined based on a configuration of the network device in an actual scenario. Specific values of the largest quantity of bits listed below are not limited. The largest quantity of bits of the second scrambling parameter should be determined based on an actual scenario. Details are not described herein again. An initialization formula of the scrambling code sequence of the first PDCCH is: ${c}_{init} = \left({N}_{ID}^{cell}⋅{2}^{16}+{n}_{PowerSavin g - DMRS - ID}\right) mod {2}^{31} ,$ where
${N}_{ID}^{cell} ⋅ {2}^{x} + {n}_{PowerSaving - DMRS - ID}$ is represented as " *c*₀*c*₁ ... *c*₉*p*₀*p*₁ ... *p*₁₅" in binary. It can be learned that bit information of ${N}_{ID}^{cell}$ is located at most significant bits of a calculation result of the initialization formula of the scrambling code sequence. All bit information of ${N}_{ID}^{cell}$ and *n_{PowerSaving-DMRS-ID}* is reserved. That is, all the bit information of ${N}_{ID}^{cell}$ and *n_{PowerSaving-DMRS-ID}* can be used, and does not overlap that in a scrambling code sequence of another PDCCH. This reduces interference from the another PDCCH.

In a specific implementation, the network device may further generate the scrambling code sequence for the first PDCCH based on ${n}_{PowerSavin g - DMRS - ID} ⋅ {2}^{m} + {N}_{ID}^{cell}$, where ${N}_{ID}^{cell}$ is the physical cell identifier, *n_{PowerSaving-DMRS-ID}* is the second scrambling parameter, $m \geq \left|{log}_{2}\left({N}_{ID , max}^{cell}\right)\right|$, m is a positive integer, and ${N}_{ID , max}^{cell}$ is a maximum value of ${N}_{ID}^{cell}$. In a specific embodiment, a range of m may be 10≤*m*≤15. For example, the scrambling code sequence of the first PDCCH is initialized by using ${N}_{ID}^{cell}$ and *n_{PowerSaving-DMRS-ID}.* Usually, a quantity of bits of the physical cell identifier is 10. If m is 10, the initialization formula of the scrambling code sequence of the first PDCCH is: ${c}_{init} = \left({n}_{PowerSavin g - DMRS - ID}⋅{2}^{10}+{N}_{ID}^{cell}\right) mod {2}^{31} ,$ where ${N}_{ID}^{cell} ⋅ {2}^{x} + {n}_{PowerSavin g - DMRS - ID}$ is represented as *" p*₀*p*₁ ... *p*₁₅*c*₀*c*₁ ... *c*₉" in binary.

If m is 11, the initialization formula of the scrambling code sequence of the first PDCCH is: ${c}_{init} = \left({n}_{PowerSavin g - DMRS - ID}⋅{2}^{11}+{N}_{ID}^{cell}\right) mod {2}^{31} ,$ where ${N}_{ID}^{cell} ⋅ {2}^{x} + {n}_{PowerSaving - DMRS - ID}$ is represented as *" p*₀*p*₁ ... *p*₁₅0*c*₀*c*₁ ... *c*₉" in binary.

If m is 12, the initialization formula of the scrambling code sequence of the first PDCCH is: ${c}_{init} = \left({n}_{PowerSavin g - DMRS - ID}⋅{2}^{12}+{N}_{ID}^{cell}\right) mod {2}^{31} ,$ where ${N}_{ID}^{cell} ⋅ {2}^{x} + {n}_{PowerSaving - DMRS - ID}$ is represented *as " p*₀*p*₁ ... *p*₁₅00*c*₀*c*₁ ... *c*₉" in binary.

If m is 13, the initialization formula of the scrambling code sequence of the first PDCCH is: ${c}_{init} = \left({n}_{PowerSavin g - DMRS - ID}⋅{2}^{13}+{N}_{ID}^{cell}\right) mod {2}^{31} ,$ where ${N}_{ID}^{cell} ⋅ {2}^{x} + {n}_{PowerSaving - DMRS - ID}$ is represented as *" p*₀*p*₁ ... *p*₁₅000*c*₀*c*₁ ... *c*₉" in binary.

If m is 14, the initialization formula of the scrambling code sequence of the first PDCCH is: ${c}_{init} = \left({n}_{PowerSavin g - DMRS - ID}⋅{2}^{14}+{N}_{ID}^{cell}\right) mod {2}^{31} ,$ where ${N}_{ID}^{cell} ⋅ {2}^{x} + {n}_{PowerSaving - DMRS - ID}$ is represented as *" p*₀*p*₁ ... *p*₁₅0000*c*₀*c*₁ ... *c*₉" in binary.

If m is 15, the initialization formula of the scrambling code sequence of the first PDCCH is: ${c}_{init} = \left({n}_{PowerSavin g - DMRS - ID}⋅{2}^{15}+{N}_{ID}^{cell}\right) mod {2}^{31} ,$ where ${N}_{ID}^{cell} ⋅ {2}^{x} + {n}_{PowerSaving - DMRS - ID}$ is represented *as " p*₀*p*₁ ... *p*₁₅00000*c*₀*c*₁ ... *c*₉" in binary.

In a specific implementation, the value of m may alternatively be 16, and the network device generates the scrambling code sequence for the first PDCCH based on ${N}_{ID}^{cell} ⋅ {2}^{16} + {n}_{PowerSavin g - DMRS - ID}$.

It can be learned from the foregoing examples that bit information of *n_{PowerSaving-DMRS- ID}* is located at most significant bits of a calculation result of the initialization formula of the scrambling code sequence, and a value of m is not less than 10. All bit information of *n_{PowerSaving-DMRS-ID}* and ${N}_{ID}^{cell}$ is reserved. That is, all the bit information of *n_{PowerSaving-DMRS-ID}* and ${N}_{ID}^{cell}$ can be used, and does not overlap that in a scrambling code sequence of another PDCCH. This reduces interference from the another PDCCH.

1302: The network device scrambles the first PDCCH based on the scrambling code sequence.

The network device scrambles the first PDCCH based on the scrambling code sequence described in step 1301.

1303: The network device sends the scrambled first PDCCH, and a terminal receives the first PDCCH sent by the network device.

1304: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 1301.

It can be learned from the embodiment corresponding to FIG. 13 that the network device generates, based on the physical cell identifier and the second scrambling parameter, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH.

It should be noted that the embodiment corresponding to FIG. 13 may be preferentially applicable to a scenario in which the network device determines to send the first PDCCH in a CSS set, but is not limited to being applicable to only this scenario

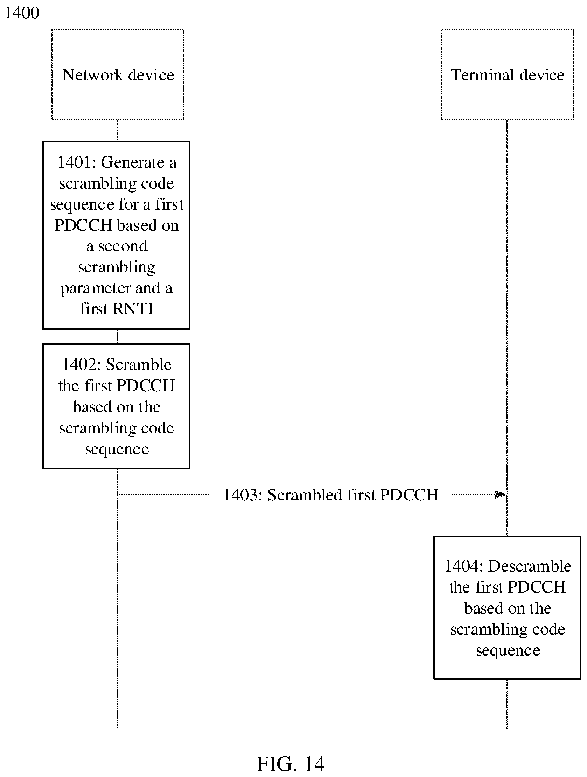

FIG. 14 is a schematic flowchart of a data processing method 1400 according to an embodiment of this application.

As shown in FIG. 14, the data processing method 1400 may include the following steps.

1401: A network device generates a scrambling code sequence for a first PDCCH based on a second scrambling parameter and a first RNTI.

The second scrambling parameter may be understood with reference to the second scrambling parameter described in the embodiment corresponding to FIG. 12, and the first RNTI may be understood with reference to the first RNTI described in the embodiment corresponding to FIG. 8. Details are not described herein again.

In a specific implementation, the network device generates the scrambling code sequence for the first PDCCH based on *n_{PS -RNTI} ·* 2*^{x} + n_{PowerSaving-DMRS-ID}*, where
*n_{PS-RNTI}* is the first radio network temporary identifier, *n_{PowerSaving-DMRS-ID}* is the second scrambling parameter, $x \geq \left|{log}_{2}\left({n}_{PowerSaving - DMRS - ID}^{max}\right)\right|$, x is a positive integer, and ${n}_{PowerSavin g - DMRS - ID}^{max}$ is a maximum value of *n_{PowerSaving-DMRS-ID}.* For example, the scrambling code sequence of the first PDCCH is initialized by using ${n}_{PowerSavin g - DMRS - ID}^{max}$ and *n_{PS-RNTI} .* Assuming that ${n}_{PowerSaving - DMRS - ID}^{max}$ is represented by using 16 bits in binary, x is 16, and *np_{DCCH-DMRS-ID}* is represented as "*c*₀*c*₁ ...*c*₁₅ " in binary. Assuming that *n_{PS-RNTI}* is represented by using 16 bits in binary, *n_{PS-RNTI}* is represented as *" p*₀*p*₁ ... *p*₁₅" in binary. An initialization formula of the scrambling code sequence of the first PDCCH is: ${c}_{init} = \left({n}_{PS - RNTI}⋅{2}^{16}+{n}_{PowerSavin g - DMRS - ID}\right) mod {2}^{31} ,$ where
*n_{PS-RNTI}·* 2*^{x} + n_{PowerSaving-DMRS-ID}* is represented as " *p*₀*p*₁ ... *p*₁₅*c*₀*c*₁ ... *c*₁₅" in binary. It can be learned that bit information of *n_{PS-RNTI}*is located at most significant bits of a calculation result of the initialization formula of the scrambling code sequence. All bit information of *n_{PowerSaving-DMRS-ID}* and *n_{PS-RNTI}* is reserved. That is, all the bit information o *n_{PowerSaving-DMRS-ID}* and *n_{PS-RNTI}* can be used. Bit information of the second scrambling parameter and the PS-RNTI configured by the network device is used to reduce a probability of overlapping with a scrambling code sequence of another PDCCH.

In a specific implementation, the network device generates the scrambling code sequence for the first PDCCH based on *n_{PowerSaving-DMRS-ID} ·* 2*ⁿ + n_{PS-RNTI}* , where
*n_{PS-RNTI}* is the first radio network temporary identifier, *n_{PowerSaving-DMRS-ID}* is the second scrambling parameter, $n \geq \left|{log}_{2}\left({n}_{PS - RNTI}^{max}\right)\right|$*,* n is a positive integer, and ${n}_{PS - RNTI}^{max}$ is a maximum value of *n_{PS-RNTI}* . For example, the scrambling code sequence of the first PDCCH is initialized by using *n_{PowerSaving-DMRS-ID}* and *n_{PS-RNTI} .* Assuming that *n_{PowerSaving-DMRS-ID}* is represented by using 16 bits in binary, *n_{PowerSaving-DMRS-ID}* is represented as " *c*₀*c*₁ ... *c*₁₅" in binary. Assuming that *n_{PS-RNTI}* is represented by using 16 bits in binary, n is 16, and *n_{PS-RNTI}* is represented *as " p*₀*p*₁ ... *p*₁₅" in binary. An initialization formula of the scrambling code sequence of the first PDCCH is: ${c}_{init} = \left({n}_{PowerSavin g - DMRS - ID}⋅{2}^{16}+{n}_{PS - RNTI}\right) mod {2}^{31} ,$ where
*n_{PowerSaving-DMRS-ID}* · 2*ⁿ + n_{PS-RNTI}* is represented as " *c*₀*c*₁ ... *c*₁₅*p*₀*p*₁ ... *p*₁₅" in binary. It can be learned that bit information of *n_{PowerSaving-DMRS-ID}* is located at most significant bits of a calculation result of the initialization formula of the scrambling code sequence. All bit information of *n_{PowerSaving-DMRS-ID}* and *n_{PS-RNTI}* is reserved. That is, all the bit information of *n_{PowerSaving-DMRS-ID}* and *n_{PS-RNTI}* can be used. Bit information of the second scrambling parameter and the PS-RNTI configured by the network device is used to reduce a probability of overlapping with a scrambling code sequence of another PDCCH.

1402: The network device scrambles the first PDCCH based on the scrambling code sequence.

The network device scrambles the first PDCCH based on the scrambling code sequence described in step 1401.

1403: The network device sends the scrambled first PDCCH, and a terminal receives the first PDCCH sent by the network device.

1404: The terminal device descrambles the first PDCCH based on the scrambling code sequence.

After receiving the first PDCCH sent by the network device, the terminal device may descramble the received first PDCCH based on the scrambling sequence that is the same as the scrambling sequence used by the network device to scramble the first PDCCH. In this embodiment of this application, the terminal device descrambles the first PDCCH based on the scrambling sequence described in step 1401.

It can be learned from the embodiment corresponding to FIG. 14 that the network device generates, based on the second scrambling parameter and the first scrambling parameter, the scrambling code sequence for the first PDCCH carrying power saving information, and the terminal device descrambles the first PDCCH based on the scrambling code sequence. In this way, the scrambling code sequence of the first PDCCH is less related to a scrambling code sequence of another PDCCH, to improve detection performance of the first PDCCH.

It should be noted that the embodiment corresponding to FIG. 14 may be applicable to a scenario in which the network device determines to send the first PDCCH in a CSS set, or may be applicable to the scenario in which the network device determines to send the first PDCCH in a USS set.

The foregoing mainly describes the solutions provided in the embodiments of this application from a perspective of interaction between the network device and the terminal device. It may be understood that, to implement the foregoing functions, the foregoing network device and terminal device include corresponding hardware structures and/or software modules for performing the functions. A person skilled in the art should be easily aware that, with reference to modules and algorithm steps of each example described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In terms of a hardware structure, the network device and the terminal device in FIG. 8 to FIG. 14 may be implemented by one physical device, or may be jointly implemented by a plurality of physical devices, or may be a logical function module in one physical device. This is not specifically limited in this embodiment of this application.

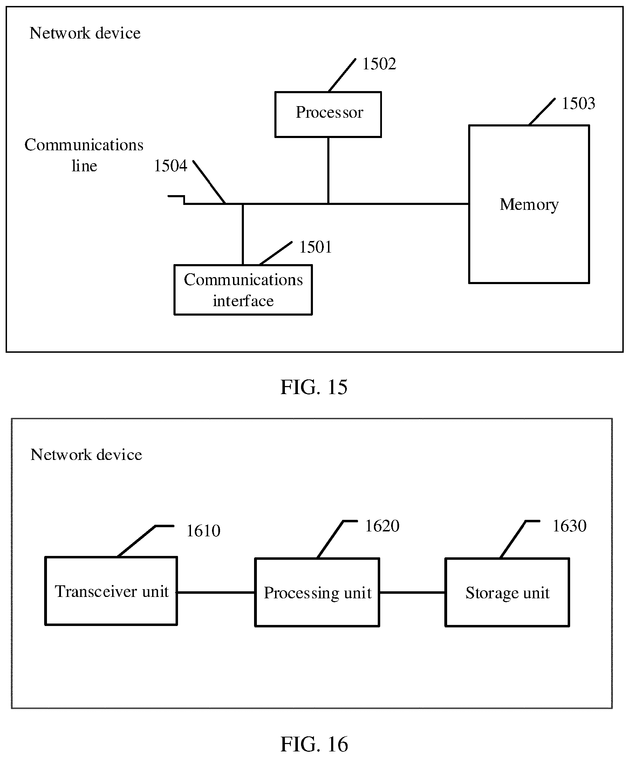

For example, the network device may be implemented by using a communications device in FIG. 15. FIG. 15 is a schematic diagram of a hardware structure of a network device according to an embodiment of this application. The communications device includes a communications interface 1501 and a processor 1502, and may further include a memory 1503.

The communications interface 1501 is configured to communicate with another device or communication network by using any apparatus such as a transceiver.

The processor 1502 includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable logic gate array (field-programmable gate array, FPGA), generic array logic (generic array logic, GAL), or any combination thereof. The processor 1502 is responsible for a communications line 1504 and general processing, and may further provide various functions, including timing, peripheral interfacing, voltage regulation, power management, and another control function. The memory 1503 may be configured to store data used when the processor 1502 performs an operation.

The memory 1503 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 1503 is not limited thereto. The memory may exist independently, and is connected to the processor 1502 by using the communications line 1504. Alternatively, the memory 1503 may be integrated with the processor 1502. If the memory 1503 and the processor 1502 are mutually independent components, the memory 1503 is connected to the processor 1502. For example, the memory 1503 and the processor 1502 may communicate with each other through the communications line. The communications interface 1501 and the processor 1502 may communicate with each other through a communications line, and the communications interface 1501 may alternatively be connected to the processor 1502 directly.

The communications line 1504 may include any quantity of interconnected buses and bridges, and the communications line 1504 links various circuits of one or more processors 1502 represented by the processor 1502 and a memory represented by the memory 1503. The communications line 1504 may further link various other circuits such as a peripheral device, a voltage stabilizer, and a power management circuit. These are well known in the art, and therefore are not further described in this application.

In a specific implementation, the network device may include:
a memory, configured to store computer-readable instructions; and
a processor coupled to the memory, where the processor is configured to perform the following operations:
   generating a scrambling code sequence for a first physical downlink control channel PDCCH, where the first PDCCH is used to carry power saving information, the scrambling code sequence is generated based on a first radio network temporary identifier and a first parameter, the first parameter may include at least one of a physical cell identifier, a cell radio network temporary identifier, and a first scrambling parameter, the first radio network temporary identifier is specific to a PDCCH carrying power saving information, and the first scrambling parameter is a scrambling parameter of a demodulation reference signal of a physical downlink control channel in a control-resource set CORESET in which the first PDCCH is located; and
   scrambling the first PDCCH based on the scrambling code sequence.

In a specific implementation, the processing unit is specifically configured to generate the scrambling code sequence for the first PDCCH based on ${N}_{ID}^{cell} ⋅ {2}^{n} + {n}_{PS - RNTI}$, where ${N}_{ID}^{cell}$ the physical cell identifier, *n_{PS-RNTI}* is the first radio network temporary identifier, $n \geq \left|{log}_{2}\left({n}_{PS - RNTI}^{max}\right)\right|$, and ${n}_{PS - RNTI}^{max}$ is a maximum value of *n_{PS-RNTI} ;* or
the processing unit is specifically configured to generate the scrambling code sequence for the first PDCCH based on ${n}_{PS - RNTI} ⋅ {2}^{m} + {N}_{ID}^{cell}$, where $m \geq \left|{log}_{2}\left({N}_{ID , max}^{cell}\right)\right|$, and ${N}_{ID , max}^{cell}$ is a maximum value of ${N}_{ID}^{cell}$.

In a specific implementation, a value of n is 16, and a value range of m is 10 ≤ *m* ≤15.

In a specific implementation, the processing unit is specifically configured to generate the scrambling code sequence for the first PDCCH based on *n_{C-RNTI}* · 2*ⁿ +n_{PS-RNTI}*, where *n_{C-RNTI}* is the cell radio network temporary identifier, *n_{PS-RNTI}* is the first radio network temporary identifier, $n \geq \left|{log}_{2}\left({n}_{PS - RNTI}^{max}\right)\right|$, and ${n}_{PS - RNTI}^{max}$ is a maximum value of *n_{PS-RNTI} ;* or
the processing unit is specifically configured to generate the scrambling code sequence for the first PDCCH based on *n_{PS-RNTI}·* 2*^{p} + n_{C-RNTI} ,* where *p ≥* |log₂(*n*_{*C*-*RNTI,*max})|, and *n*_{*C-RNTI*,max} is a maximum value of *n_{C-RNTI}.*

In a specific implementation, the processing unit is specifically configured to generate the scrambling code sequence for the first PDCCH based on *n_{PS-RNTI}* · 2*^{q} + n_{PDCCH-DMRS-ID}* , where *n_{PS-RNTI}* is the first radio network temporary identifier, *n_{PDCCH-DMRS-ID}* is the first scrambling parameter, $q \geq \left|{log}_{2}\left({n}_{PDCCH - DMRS - ID}^{max}\right)\right|$, and ${n}_{PDCCH - DMRS - ID}^{max}$ is a maximum value of *n_{PDCCH-DMRS-ID}*; or
the processing unit is specifically configured to generate the scrambling code sequence for the first PDCCH based on *n_{PDCCH -DMRS-ID}* · 2*ⁿ + n_{PS-RNTI}* , where $n \geq \left|{log}_{2}\left({n}_{PS - RNTI}^{max}\right)\right|$, and ${n}_{PS - RNTI}^{max}$ is a maximum value of *n_{PS-RNTI}.*

In a specific implementation, the network device may include:
a memory, configured to store computer-readable instructions; and
a processor coupled to the memory, where the processor is configured to perform the following operations:
   generating a scrambling code sequence for a first physical downlink control channel PDCCH, where the first PDCCH is used to carry power saving information, the scrambling code sequence is generated based on a second scrambling parameter, the second scrambling parameter is used to scramble a demodulation reference signal DMRS of the first PDCCH, and the second scrambling parameter is specific to a PDCCH carrying power saving information; and
   scrambling the first PDCCH based on the scrambling code sequence.

In a specific implementation, the processing unit is specifically configured to generate the scrambling code sequence for the first physical downlink control channel PDCCH based on a physical cell identifier and the second scrambling parameter.

In a specific implementation, the processing unit is specifically configured to generate the scrambling code sequence for the first PDCCH based on ${N}_{ID}^{cell} ⋅ {2}^{x} + {n}_{PowerSaving - DMRS - ID}$, where ${N}_{ID}^{cell}$ is the physical cell identifier, *n_{PowerSaving-DMRS-ID}* is the second scrambling parameter, $x \geq \left|{log}_{2}\left({n}_{PowerSavin g - DMRS - ID}^{max}\right)\right|$, and ${n}_{PowerSaving - DMRS - ID}^{max}$ is a maximum value of *n_{PowerSaving-DMRS-ID};* or
the processing unit is specifically configured to generate the scrambling code sequence for the first PDCCH based on ${n}_{PowerSavin g - DMRS - ID} ⋅ {2}^{m} + {N}_{ID}^{cell}$, where $m \geq \left|{log}_{2}\left({N}_{ID , max}^{cell}\right)\right|$ ,and ${N}_{ID , max}^{cell}$ is a maximum value of ${N}_{ID}^{cell}$.

In a specific implementation, a value of x is 16, and a value range of m is 10 ≤ *m* ≤15.

In a specific implementation, the processing unit is specifically configured to generate the scrambling code sequence for the first physical downlink control channel PDCCH based on a first radio network temporary identifier and the second scrambling parameter, where the first radio network temporary identifier is specific to a PDCCH carrying power saving information.

In a specific implementation, the processing unit is specifically configured to generate the scrambling code sequence for the first PDCCH based on *n_{PS-RNTI}* · 2*^{x} + n_{PowerSaving-DMRS-ID}* , where *n_{PS-RNTI}* is the first radio network temporary identifier, *n_{PowerSaving-DMRS-ID}* is the second scrambling parameter, $x \geq \left|{log}_{2}\left({n}_{PowerSavin g - DMRS - ID}^{max}\right)\right|$, and ${n}_{PowerSavin g - DMRS - ID}^{max}$ is a maximum value of *n_{PowerSaving-DMRS-ID}* ; or
the processing unit is specifically configured to generate the scrambling code sequence for the first PDCCH based on *n_{PowerSaving-DMRS-ID}* · 2*ⁿ + n_{PS-RNTI}* , where $n \geq \left|{log}_{2}\left({n}_{PS - RNTI}^{max}\right)\right|$, and ${n}_{PS - RNTI}^{max}$ is a maximum value of *n_{PS-RNTI}.*

In this embodiment of this application, the communications interface may be considered as a transceiver unit of the network device, the processor that has a processing function may be considered as a processing unit of the network device, and the memory may be considered as a storage unit of the network device. As shown in FIG. 16, the network device may include a transceiver unit 1610, a processing unit 1620, and a storage unit 1630. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit may also be sometimes referred to as a transceiver, a transceiver machine, a transceiver circuit, or the like. The receiving unit may also be sometimes referred to as a receiver, a receiver machine, a receiver circuit, or the like. The sending unit may also be sometimes referred to as a transmitter, a transmitter machine, a transmitter circuit, or the like.

In a specific implementation, the transceiver unit 1610 is configured to perform receiving and sending operations on a network device side in step 803 in FIG. 8, and/or the transceiver unit 1610 is further configured to perform other receiving and sending steps on the network device side in the embodiment corresponding to FIG. 8. The processing unit 1620 is configured to perform processing operations on the network device side in steps 801 and 802 in FIG. 8, and/or the processing unit 1620 is further configured to perform other processing steps on the network device side in the embodiment corresponding to FIG. 8.

In a specific implementation, the transceiver unit 1610 is configured to perform receiving and sending operations on a network device side in step 903 in FIG. 9, and/or the transceiver unit 1610 is further configured to perform other receiving and sending steps on the network device side in the embodiment corresponding to FIG. 9. The processing unit 1620 is configured to perform processing operations on the network device side in steps 901 and 902 in FIG. 9, and/or the processing unit 1620 is further configured to perform other processing steps on the network device side in the embodiment corresponding to FIG. 9.

In a specific implementation, the transceiver unit 1610 is configured to perform receiving and sending operations on a network device side in step 1003 in FIG. 10, and/or the transceiver unit 1610 is further configured to perform other receiving and sending steps on the network device side in the embodiment corresponding to FIG. 10. The processing unit 1620 is configured to perform processing operations on the network device side in steps 1001 and 1002 in FIG. 10, and/or the processing unit 1620 is further configured to perform other processing steps on the network device side in the embodiment corresponding to FIG. 10.

In a specific implementation, the transceiver unit 1611 is configured to perform receiving and sending operations on a network device side in step 1103 in FIG. 11, and/or the transceiver unit 1611 is further configured to perform other receiving and sending steps on the network device side in the embodiment corresponding to FIG. 11. The processing unit 1620 is configured to perform processing operations on the network device side in steps 1101 and 1102 in FIG. 11, and/or the processing unit 1620 is further configured to perform other processing steps on the network device side in the embodiment corresponding to FIG. 11.

In a specific implementation, the transceiver unit 1612 is configured to perform receiving and sending operations on a network device side in step 1203 in FIG. 12, and/or the transceiver unit 1612 is further configured to perform other receiving and sending steps on the network device side in the embodiment corresponding to FIG. 12. The processing unit 1620 is configured to perform processing operations on the network device side in steps 1201 and 1202 in FIG. 12, and/or the processing unit 1620 is further configured to perform other processing steps on the network device side in the embodiment corresponding to FIG. 12.

In a specific implementation, the transceiver unit 1613 is configured to perform receiving and sending operations on a network device side in step 1303 in FIG. 13, and/or the transceiver unit 1613 is further configured to perform other receiving and sending steps on the network device side in the embodiment corresponding to FIG. 13. The processing unit 1620 is configured to perform processing operations on the network device side in steps 1301 and 1302 in FIG. 13, and/or the processing unit 1620 is further configured to perform other processing steps on the network device side in the embodiment corresponding to FIG. 13.

In a specific implementation, the transceiver unit 1614 is configured to perform receiving and sending operations on a network device side in step 1403 in FIG. 14, and/or the transceiver unit 1614 is further configured to perform other receiving and sending steps on the network device side in the embodiment corresponding to FIG. 14. The processing unit 1620 is configured to perform processing operations on the network device side in steps 1401 and 1402 in FIG. 14, and/or the processing unit 1620 is further configured to perform other processing steps on the network device side in the embodiment corresponding to FIG. 14.

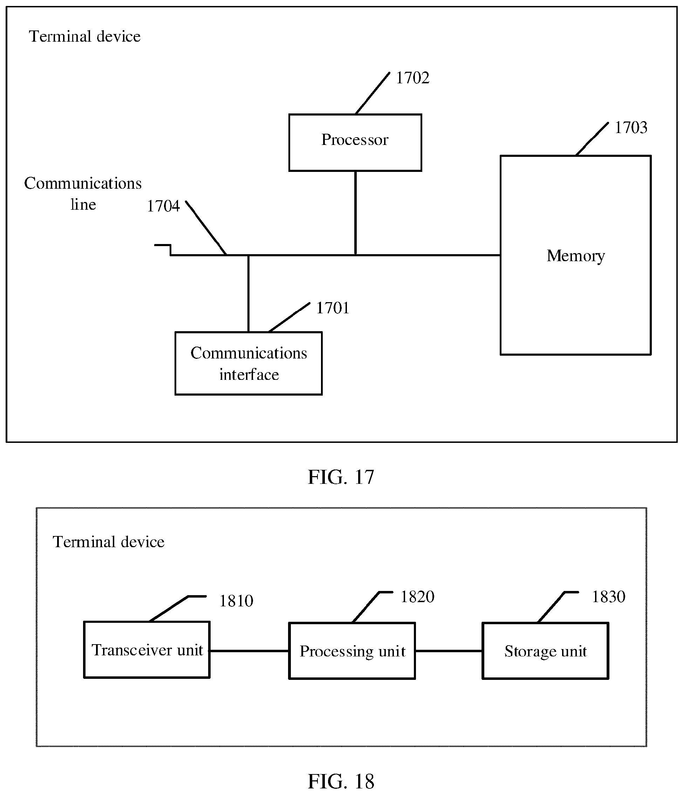

In addition, the terminal device may be implemented by using a communications device in FIG. 17. FIG. 17 is a schematic diagram of a hardware structure of a terminal device according to an embodiment of this application. The communications device includes a communications interface 1701 and a processor 1702, and may further include a memory 1703.

The communications interface 1701 is configured to communicate with another device or a communications network, such as an Ethernet, a radio access network (radio access network, RAN), or a wireless local area network (wireless local area network, WLAN) by using any apparatus such as a transceiver.

The processor 1702 includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable logic gate array (field-programmable gate array, FPGA), generic array logic (generic array logic, GAL), or any combination thereof. The processor 1702 is responsible for a communications line 1704 and general processing, and may further provide various functions, including timing, peripheral interfacing, voltage regulation, power management, and another control function. The memory 1703 may be configured to store data used when the processor 1702 performs an operation.

The memory 1703 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. However, the memory 1703 is not limited thereto. The memory may exist independently, and is connected to the processor 1702 through the communications line 1704. Alternatively, the memory 1703 may be integrated with the processor 1702. If the memory 1703 and the processor 1702 are mutually independent components, the memory 1703 is connected to the processor 1702. For example, the memory 1703 and the processor 1702 may communicate with each other through the communications line. The communications interface 1701 and the processor 1702 may communicate with each other through a communications line, and the communications interface 1701 may alternatively be connected to the processor 1702 directly.

The communications line 1704 may include any quantity of interconnected buses and bridges, and the communications line 1704 links various circuits of one or more processors 1702 represented by the processor 1702 and a memory represented by the memory 1703. The communications line 1704 may further link various other circuits such as a peripheral device, a voltage stabilizer, and a power management circuit. These are well known in the art, and therefore are not further described in this application.

In a specific implementation, the terminal device may include: a communications interface, configured to receive a first physical downlink control channel PDCCH sent by a network device, where the first PDCCH is used to carry power saving information; and
a memory, configured to store computer-readable instructions; and
a processor coupled to the memory, where the processor is configured to perform the following operations:
   descrambling the first PDCCH based on a scrambling code sequence, where the scrambling code sequence is generated based on a first radio network temporary identifier and a first parameter, the first parameter may include at least one of a physical cell identifier, a cell radio network temporary identifier, and a first scrambling parameter, the first radio network temporary identifier is specific to a PDCCH carrying power saving information, and the first scrambling parameter is a scrambling parameter of a demodulation reference signal of a physical downlink control channel in a control-resource set CORESET in which the first PDCCH is located.

In a specific implementation, the processing unit is specifically configured to descramble the first PDCCH based on ${N}_{ID}^{cell} ⋅ {2}^{n} + {n}_{PS - RNTI}$, where ${N}_{ID}^{cell}$ is the physical cell identifier, *n_{PS-RNTI}* is the first radio network temporary identifier, $n \geq \left|{log}_{2}\left({n}_{PS - RNTI}^{max}\right)\right|$, and ${n}_{PS - RNTI}^{max}$ is a maximum value of *n_{PS-RNTI}*; or the processing unit is configured to descramble the first PDCCH based on ${n}_{PS - RNTI} ⋅ {2}^{m} + {N}_{ID}^{cell}$, where $m \geq \left|{log}_{2}\left({N}_{ID , max}^{cell}\right)\right|$, and ${N}_{ID , max}^{cell}$ is a maximum value of ${N}_{ID}^{cell}$*.*

In a specific implementation, a value of n is 16, and a value range of m is 10 ≤ *m* ≤15.

In a specific implementation, the processing unit is specifically configured to descramble the first PDCCH based on *n_{C-RNTI}* · 2*ⁿ + n_{PS-RNTI}* , where *n_{C-RNTI}* is the cell radio network temporary identifier, *n_{PS-RNTI}* is the first radio network temporary identifier, $n \geq \left|{log}_{2}\left({n}_{PS - RNTI}^{max}\right)\right|$, and ${n}_{PS - RNTI}^{max}$ is a maximum value of *n_{PS-RNTI} ;* or the processing unit is specifically configured to descramble the first PDCCH based on *n_{PS-RNTI}.* 2*^{p} + n_{C-RNTI}* , where *p* ≥ |log₂(*n*_{*C*-*RNTI,*max})|, and *n*_{*C-RNTI*,max} is a maximum value of *n_{C-RNTI}.*

In a specific implementation, the processing unit is specifically configured to descramble the first PDCCH based on *n_{PS-RNTI}·* 2*^{q} + n_{PDCCH -DMRS-ID}*, where *n_{PS-RNTI}* is the first radio network temporary identifier, *n_{PDCCH-DMRS-ID}* is the first scrambling parameter, $q \geq \left|{log}_{2}\left({n}_{PDCCH - DMRS - ID}^{max}\right)\right|$, and *np_{DCCH-DMRS-ID}* is a maximum value of *n_{PDCCH-DMRS-ID}*; or the processing unit is specifically configured to descramble the first PDCCH based on *n_{PDCCH-DMRS-ID}* · 2*ⁿ+ n_{PS-RNTI}*, where $n \geq \left|{log}_{2}\left({n}_{PS - RNTI}^{max}\right)\right|$, and ${n}_{PS - RNTI}^{max}$ is a maximum value of *n_{PS-RNTI}*.

In a specific implementation, the terminal device may include: a communications interface, configured to receive a first physical downlink control channel PDCCH sent by a network device, where the first PDCCH is used to carry power saving information;
a memory, configured to store computer-readable instructions; and
a processor coupled to the memory, where the processor is configured to perform the following operations:
   descrambling the first PDCCH based on a scrambling code sequence, where the scrambling code sequence is generated based on a second scrambling parameter, the second scrambling parameter is used to scramble a demodulation reference signal DMRS of the first PDCCH, and the second scrambling parameter is specific to a PDCCH carrying power saving information.

In a specific implementation, the processing unit is specifically configured to descramble the first physical downlink control channel PDCCH based on a physical cell identifier and the second scrambling parameter.

In a specific implementation, the processing unit is specifically configured to descramble the first PDCCH based on ${N}_{ID}^{cell} ⋅ {2}^{x} + {n}_{PowerSaving - DMRS - ID}$, where ${N}_{ID}^{cell}$ is the physical cell identifier, *n_{PowerSaving} - DMRS - ID* is the second scrambling parameter, $x \geq \left|{log}_{2}\left({n}_{PowerSaving - DMRS - ID}^{max}\right)\right|$*,* and ${n}_{PowerSavin g - DMRS - ID}^{max}$ is a maximum value of *n_{PowerSaving-DMRS-ID}* ; or the terminal device descrambles the first PDCCH based on ${n}_{PowerSavin g - DMRS - ID} ⋅ {2}^{m} + {N}_{ID}^{cell}$*,* where $m \geq \left|{log}_{2}\left({N}_{ID , max}^{cell}\right)\right|$, and ${N}_{ID , max}^{cell}$ is a maximum value of ${N}_{ID}^{cell}$.

In a specific implementation, a value of x is 16, and a value range of m is 10 ≤ *m* ≤15.

In a specific implementation, the processing unit is specifically configured to descramble the first physical downlink control channel PDCCH based on a first radio network temporary identifier and the second scrambling parameter, where the first radio network temporary identifier is specific to a PDCCH carrying power saving information.

In a specific implementation, the processing unit is specifically configured to descramble the first PDCCH based on *n_{PS-RNTI} ·2^{x} + n_{PowerSaving-DMRS-ID}* , where *n_{PS-RNTI}* is the first radio network temporary identifier, *n_{PowerSaving-DMRS-ID}* is the second scrambling parameter, $x \geq \left|{log}_{2}\left({n}_{PowerSaving - DMRS - ID}^{max}\right)\right|$, and ${n}_{PowerSavin g - DMRS - ID}^{max}$ is a maximum value of *n_{PowerSaving - DMRS - ID}* ; or the terminal device descrambles the first PDCCH based on *n_{PowerSaving - DMRS -ID}* ·*2ⁿ + n_{PS} - RNTI*, where $n \geq \left|{log}_{2}\left({n}_{PS - RNTI}^{max}\right)\right|$*,* and ${n}_{PS - RNTI}^{max}$ is a maximum value of *n_{PS-RNTI}.*

In this embodiment of this application, the communications interface may be considered as a transceiver unit of the terminal device, the processor that has a processing function may be considered as a processing unit of the terminal device, and the memory may be considered as a storage unit of the terminal device. As shown in FIG. 18, the terminal device includes a transceiver unit 1810, a processing unit 1820, and a storage unit 1830. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 1810 and that is configured to implement a receiving function may be considered as a receiving unit, and a component that is in the transceiver unit 1810 and that is configured to implement a sending function may be considered as a sending unit. That is, the transceiver unit 1810 includes the receiving unit and the sending unit. The transceiver unit may also be sometimes referred to as a transceiver, a transceiver machine, a transceiver circuit, or the like. The receiving unit may also be sometimes referred to as a receiver, a receiver machine, a receiver circuit, or the like. The sending unit may also be sometimes referred to as a transmitter, a transmitter machine, a transmitter circuit, or the like.

In a specific implementation, the transceiver unit 1810 is configured to perform receiving and sending operations on a terminal device side in step 803 in FIG. 8. The processing unit 1820 is configured to perform step 804 in FIG. 8, and/or the processing unit 1820 is further configured to perform other processing steps on the network device side in the embodiment corresponding to FIG. 8.

In a specific implementation, the transceiver unit 1810 is configured to perform receiving and sending operations on a terminal device side in step 903 in FIG. 9. The processing unit 1820 is configured to perform step 904 in FIG. 9, and/or the processing unit 1820 is further configured to perform other processing steps on the network device side in the embodiment corresponding to FIG. 9.

In a specific implementation, the transceiver unit 1810 is configured to perform receiving and sending operations on a terminal device side in step 1003 in FIG. 10. The processing unit 1820 is configured to perform step 1004 in FIG. 10, and/or the processing unit 1820 is further configured to perform other processing steps on the network device side in the embodiment corresponding to FIG. 10.

In a specific implementation, the transceiver unit 1811 is configured to perform receiving and sending operations on a terminal device side in step 1103 in FIG. 11. The processing unit 1820 is configured to perform step 1104 in FIG. 11, and/or the processing unit 1820 is further configured to perform other processing steps on the network device side in the embodiment corresponding to FIG. 11.

In a specific implementation, the transceiver unit 1812 is configured to perform receiving and sending operations on a terminal device side in step 1203 in FIG. 12. The processing unit 1820 is configured to perform step 1204 in FIG. 12, and/or the processing unit 1820 is further configured to perform other processing steps on the network device side in the embodiment corresponding to FIG. 12.

In a specific implementation, the transceiver unit 1813 is configured to perform receiving and sending operations on a terminal device side in step 1303 in FIG. 13. The processing unit 1820 is configured to perform step 1304 in FIG. 13, and/or the processing unit 1820 is further configured to perform other processing steps on the network device side in the embodiment corresponding to FIG. 13.

In a specific implementation, the transceiver unit 1814 is configured to perform receiving and sending operations on a terminal device side in step 1403 in FIG. 14. The processing unit 1820 is configured to perform step 1404 in FIG. 14, and/or the processing unit 1820 is further configured to perform other processing steps on the network device side in the embodiment corresponding to FIG. 14.

All or a part of the foregoing embodiments may be implemented by using software, hardware, firmware, or any combination thereof. When the software is used to implement the embodiments, all or a part of the embodiments may be implemented in a form of a computer program product.

The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or transmitted from a computer-readable storage medium to another computer-readable storage medium. For example, the computer instructions may be transmitted from a website, computer, server, or data center to another website, computer, server, or data center in wired (for example, a coaxial cable, an optical fiber, or a digital subscriber line (DSL)) or wireless (for example, infrared, wireless, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person of ordinary skill in the art may understand that all or some of the steps of the methods in the embodiments may be implemented by a program instructing related hardware. The program may be stored in a computer-readable storage medium. The storage medium may include a ROM, a RAM, a magnetic disk, or an optical disc, or the like.

The scrambling method, the descrambling method, the terminal device, the network device, and the storage medium that are provided in the embodiments of this application are described in detail above. In this specification, specific examples are used to describe principles and implementations of this application. The description about the embodiments is merely provided to help understand the method and core ideas of this application. Therefore, the content of this specification shall not be construed as a limitation on this application.

## Claims

1. A scrambling method, comprising:
generating (1201), by a network device, a scrambling code sequence for a first physical downlink control channel, PDCCH, wherein the first PDCCH is used to carry power saving information, the scrambling code sequence is generated based on a second scrambling parameter, the second scrambling parameter is used to scramble a demodulation reference signal, DMRS, of the first PDCCH, and the second scrambling parameter is specific to a PDCCH carrying power saving information; and
scrambling (1202), by the network device, the first PDCCH based on the scrambling code sequence,
wherein the generating, by a network device, a scrambling code sequence for a first physical downlink control channel, PDCCH, comprises:
generating, by the network device, the scrambling code sequence for the first physical downlink control channel, PDCCH, based on a physical cell identifier and the second scrambling parameter; or
wherein the generating, by a network device, a scrambling code sequence for a first physical downlink control channel, PDCCH, comprises:
generating, by the network device, the scrambling code sequence for the first physical downlink control channel, PDCCH, based on a first radio network temporary identifier and the second scrambling parameter, wherein the first radio network temporary identifier is specific to a PDCCH carrying power saving information.

2. The method according to claim 1, wherein the generating, by the network device, the scrambling code sequence for the first physical downlink control channel, PDCCH, based on the physical cell identifier and the second scrambling parameter comprises:
generating (1301), by the network device, the scrambling code sequence for the first PDCCH based on ${N}_{ID}^{cell} ⋅ {2}^{x} + {n}_{PowerSaving - DMRS - ID}$*,* wherein ${N}_{ID}^{cell}$ is the physical cell identifier, *n_{PowerSavin g - DMRS -ID}* is the second scrambling parameter, $x \geq \left|{log}_{2}\left({n}_{PowerSaving - DMRS - ID}^{max}\right)\right|$, x is a positive integer, and ${n}_{PowerSavin g - DMRS - ID}^{max}$ is a maximum value of *n_{PowerSaving - DMRS - ID}* ; or
generating, by the network device, the scrambling code sequence for the first PDCCH based on ${n}_{PowerSavin g - DMRS - ID} ⋅ {2}^{m} + {N}_{ID}^{cell}$*,* wherein $m \geq \left|{log}_{2}\left({N}_{ID , max}^{cell}\right)\right|$*,* m is a positive integer, and ${N}_{ID , max}^{cell}$ is a maximum value of ${N}_{ID}^{cell}$ .

3. The method according to claim 2, wherein a value of x is 16, and a value range of m is 10 ≤*m* ≤15.

4. The scrambling method according to claim 1, wherein the generating, by the network device, the scrambling code sequence for the first physical downlink control channel, PDCCH, based on a first radio network temporary identifier and the second scrambling parameter comprises:
generating (1401), by the network device, the scrambling code sequence for the first PDCCH based on *n_{PS-RNTI} · 2^{x} + n_{PowerSaving -DMRS-ID},* x is a positive integer, wherein *n_{PS-RNTI}* is the first radio network temporary identifier, *n_{PowerSavin g-DMRS -ID}* is the second scrambling parameter, $x \geq \left|{log}_{2}\left({n}_{powersaving - DMRS - ID}^{max}\right)\right|$, and ${n}_{PowerSaving - DMRS - ID}^{max}$ is a maximum value of *n_{PowerSavin} g -DMRS -ID* ; or
generating, by the network device, the scrambling code sequence for the first PDCCH based on *n_{PowerSavin g-DMRS -ID}* · 2*ⁿ+ n_{PS-RNTI} ,* wherein $n \geq \left|{log}_{2}\left({n}_{PS - RNTI}^{max}\right)\right|$*,* n is a positive integer, and ${n}_{PS - RNTI}^{max}$ is a maximum value of *n_{PS-RNTI}* .

5. A descrambling method, comprising:
receiving (1203), by a terminal device, a first physical downlink control channel, PDCCH, sent by a network device, wherein the first PDCCH is used to carry power saving information; and
descrambling (1204), by the terminal device, the first PDCCH based on a scrambling code sequence, wherein the scrambling code sequence is generated based on a second scrambling parameter, the second scrambling parameter is used to scramble a demodulation reference signal, DMRS, of the first PDCCH, and the second scrambling parameter is specific to a PDCCH carrying power saving information,
wherein the descrambling, by the terminal device, the first PDCCH based on a scrambling code sequence comprises:
descrambling, by the terminal device, the first physical downlink control channel, PDCCH, based on a physical cell identifier and the second scrambling parameter; or
wherein the descrambling, by the terminal device, the first PDCCH based on a scrambling code sequence comprises:
descrambling, by the terminal device, the first physical downlink control channel, PDCCH, based on a first radio network temporary identifier and the second scrambling parameter, wherein the first radio network temporary identifier is specific to a PDCCH carrying power saving information.

6. The method according to claim 5, wherein the descrambling, by the terminal device, the first physical downlink control channel, PDCCH, based on the physical cell identifier and the second scrambling parameter comprises:
descrambling, by the terminal device, the first PDCCH based on ${N}_{ID}^{cell} ⋅ {2}^{x} + {n}_{PowerSaving - DMRS - ID}$*,* x is a positive integer, wherein ${N}_{ID}^{cell}$ is the physical cell identifier, *n_{PowerSavin g -DMRS -ID}* is the second scrambling parameter, $x \geq \left|{log}_{2}\left({n}_{PowerSavin g - DMRS - ID}^{max}\right)\right|$*,* and ${n}_{PowerSavin g - DMRS - ID}^{max}$ is a maximum value of *nPowerSaving-DMRS-ID* ; or
descrambling, by the terminal device, the first PDCCH based on ${n}_{PowerSavin g - DMRS - ID} ⋅ {2}^{m} + {N}_{ID}^{cell}$*,* wherein $m \geq \left|{log}_{2}\left({N}_{ID , max}^{cell}\right)\right|$*,* m is a positive integer, and ${N}_{ID , max}^{cell}$ is a maximum value of ${N}_{ID}^{cell}$*.*

7. The method according to claim 6, wherein a value of n is 16, and a value range of m is 10 ≤ m ≤ 15.

8. The method according to claim 5, wherein the descrambling, by the terminal device, the first physical downlink control channel, PDCCH, based on a first radio network temporary identifier and the second scrambling parameter comprises:
descrambling, by the terminal device, the first PDCCH based on *n_{PS-RNTI} · 2^{x} +n_{PowerSaving-DMRS-ID} ,* wherein *n_{PS-RNTI}* is the first radio network temporary identifier, *n_{PowerSavin g-DMRS -ID}* is the second scrambling parameter, $x \geq \left|{log}_{2}\left({n}_{PowerSavin g - DMRS - ID}^{max}\right)\right|$*,* x is a positive integer, and ${n}_{PowerSavin g - DMRS - ID}^{max}$ is a maximum value of *n_{PowerSaving- DMRS -ID}* ; or
descrambling, by the terminal device, the first PDCCH based on *n_{PowerSaving-DMRS-ID} · 2ⁿ + n_{PS-RNTI}* , wherein $n \geq \left|{log}_{2}\left({n}_{PS - RNTI}^{max}\right)\right|$*,* n is a positive integer, and ${n}_{PS - RNTI}^{max}$ is a maximum value of *n_{PS-RNTI}.*

9. A network device configured to perform the method according to any one of claims 1-4 or a terminal device configured to perform the method according to any one of claims 5-8.

10. A computer program product comprising instructions which, when executed by a computer, cause a network device to carry out the method according to any one of claims 1-4 or a terminal device to carry out the method according to any one of claims 5-8.

11. A computer-readable storage medium comprising instructions which, when executed by a computer, cause a network device to carry out the method according to any one of claims 1-4 or a terminal device to carry out the method according to any one of claims 5-8.

## Patentansprüche

1. Verschlüsselungsverfahren, umfassend:
Erzeugen (1201), durch eine Netzwerkvorrichtung, einer Verschlüsselungscodesequenz für einen ersten physischen Downlink-Steuerkanal, PDCCH, wobei der erste PDCCH verwendet wird, um Energiesparinformationen mitzuführen, wobei die Verschlüsselungscodesequenz basierend auf einem zweiten Verschlüsselungsparameter erzeugt wird, wobei der zweite Verschlüsselungsparameter verwendet wird, um ein Demodulationsreferenzsignal, DMRS, des ersten PDCCH zu verschlüsseln, und wobei der zweite Verschlüsselungsparameter für eine PDCCH spezifisch ist, die Energiesparinformationen mitführt; und
Verschlüsseln (1202), durch die Netzwerkvorrichtung, des ersten PDCCH basierend auf der Verschlüsselungscodesequenz,
wobei das Erzeugen, durch eine Netzwerkvorrichtung, einer Verschlüsselungscodesequenz für einen ersten physischen Downlink-Steuerkanal, PDCCH, umfasst:
Erzeugen, durch die Netzwerkvorrichtung, der Verschlüsselungscodesequenz für den ersten physischen Downlink-Steuerkanal, PDCCH, basierend auf einer physischen Zellenkennung und dem zweiten Verschlüsselungsparameter; oder
wobei das Erzeugen, durch eine Netzwerkvorrichtung, einer Verschlüsselungscodesequenz für einen ersten physischen Downlink-Steuerkanal, PDCCH, umfasst:
Erzeugen, durch die Netzwerkvorrichtung, der Verschlüsselungscodesequenz für den ersten physischen Downlink-Steuerkanal, PDCCH, basierend auf einer ersten befristeten Kennung eines Funknetzwerks und dem zweiten Verschlüsselungsparameter, wobei die erste befristete Kennung eines Funknetzwerks für einen PDCCH spezifisch ist, der Energiesparinformationen mitführt.

2. Verfahren nach Anspruch 1, wobei das Erzeugen, durch die Netzwerkvorrichtung, der Verschlüsselungscodesequenz für den ersten physischen Downlink-Steuerkanal, PDCCH, basierend auf der physischen Zellenkennung und dem zweiten Verschlüsselungsparameter umfasst:
Erzeugen (1301), durch die Netzwerkvorrichtung, der Verschlüsselungscodesequenz für den ersten PDCCH basierend auf ${N}_{ID}^{Zelle} ⋅ {2}^{x} + {n}_{Energiespar - DMRS - ID}$, wobei ${N}_{ID}^{Zelle}$ die physische Zellenkennung ist, wobei n_{Energiespar-DMRS-ID} der zweite Verschlüsselungsparameter ist, wobei $x \geq \left|{log}_{2}\left({n}_{Energiespar - DMRS - ID}^{max}\right)\right|$ ist, wobei x eine positive ganze Zahl ist und wobei ${n}_{Energiespar - DMRS - ID}^{max}$ ein Maximalwert von n_{Energiespar-DMRS-ID} ist; oder
Erzeugen, durch die Netzwerkvorrichtung, der Verschlüsselungscodesequenz für den ersten PDCCH basierend auf ${n}_{Energiespar - DMRS - ID} ⋅ {2}^{m} + {N}_{ID}^{Zelle}$ wobei $m \geq \left|{log}_{2}\left({N}_{ID , max}^{Zelle}\right)\right|$ ist, wobei m eine positive ganze Zahl ist und wobei ${N}_{ID , max}^{Zelle}$ ein Maximalwert von ${N}_{ID}^{Zelle}$ ist.

3. Verfahren nach Anspruch 2, wobei ein Wert von x 16 ist und ein Wertebereich von m 10≤m≤15 ist.

4. Verschlüsselungsverfahren nach Anspruch 1, wobei das Erzeugen, durch die Netzwerkvorrichtung, der Verschlüsselungscodesequenz für den ersten physischen Downlink-Steuerkanal, PDCCH, basierend auf einer ersten befristeten Kennung eines Funknetzwerks und dem zweiten Verschlüsselungsparameter umfasst:
Erzeugen (1401), durch die Netzwerkvorrichtung, der Verschlüsselungscodesequenz für den ersten PDCCH basierend auf n_{PS-RNTI} · 2^{x} + n_{Energiespar-DMRS-ID}, wobei x eine positive ganze Zahl ist, wobei n_{PS-RNTI} die erste befristete Kennung eines Funknetzwerks n_{Energiespar-DMRS-ID} ist, wobei $x \geq \left|{log}_{2}\left({n}_{Energiespar - DMRS - ID}^{max}\right)\right|$ der zweite Verschlüsselungsparameter ist und wobei ${n}_{Energiespar - DMRS - ID}^{max}$ ein Maximalwert von n_{Energiespar-DMRS-ID} ist; oder
Erzeugen, durch die Netzwerkvorrichtung, der Verschlüsselungscodesequenz für den ersten PDCCH basierend auf n_{Energiespar-DMRS-ID} · 2ⁿ + n_{PS-RNTI} , wobei $n \geq \left|{log}_{2}\left({n}_{PS - RNTI}^{max}\right)\right|$ ist, wobei n eine positive ganze Zahl ist und wobei ${n}_{PS - RNTI}^{max}$ ein Maximalwert von n_{RS-RNTI} ist.

5. Entschlüsselungsverfahren, umfassend:
Empfangen (1203), in einer Endgerätevorrichtung, eines ersten physischen Downlink-Steuerkanals, PDCCH, der von einer Netzwerkvorrichtung gesendet wird, wobei der erste PDCCH verwendet wird, um Energiesparinformationen mitzuführen; und
Entschlüsseln (1204), durch die Endgerätevorrichtung, des ersten PDCCH basierend auf einer Verschlüsselungscodesequenz, wobei die Verschlüsselungscodesequenz basierend auf einem zweiten Verschlüsselungsparameter erzeugt wird, wobei der zweite Verschlüsselungsparameter verwendet wird, um ein Demodulationsreferenzsignal, DMRS, des ersten PDCCH zu verschlüsseln, und wobei der zweite Verschlüsselungsparameter für eine PDCCH spezifisch ist, die Energiesparinformationen mitführt,
wobei das Entschlüsseln, durch die Endgerätevorrichtung, des ersten PDCCH basierend auf einer Verschlüsselungscodesequenz umfasst:
Entschlüsseln, durch die Endgerätevorrichtung, des ersten physischen Downlink-Steuerkanals, PDCCH, basierend auf einer physischen Zellenkennung und dem zweiten Verschlüsselungsparameter; oder
wobei das Entschlüsseln, durch die Endgerätevorrichtung, des ersten PDCCH basierend auf einer Verschlüsselungscodesequenz umfasst:
Entschlüsseln, durch die Endgerätevorrichtung, des ersten physischen Downlink-Steuerkanals, PDCCH, basierend auf einer ersten befristeten Kennung eines Funknetzwerks und dem zweiten Verschlüsselungsparameter, wobei die erste befristete Kennung eines Funknetzwerks für einen PDCCH spezifisch ist, der Energiesparinformationen mitführt.

6. Verfahren nach Anspruch 5, wobei das Entschlüsseln, durch die Endgerätevorrichtung, des ersten physischen Downlink-Steuerkanals, PDCCH, basierend auf der physischen Zellenkennung und dem zweiten Verschlüsselungsparameter umfasst:
Entschlüsseln, durch die Endgerätevorrichtung, des ersten PDCCH basierend auf ${N}_{ID}^{Zelle}$ . 2^{x} + n_{Energiespar-DMRS-ID}, wobei x eine positive ganze Zahl ist, wobei ${N}_{ID}^{Zelle}$ die physische Zellenkennung ist, wobei n_{Energiespar-DMRS-ID} der zweite Verschlüsselungsparameter ist, wobei $x \geq \left|{log}_{2}\left({n}_{Energiespar - DMRS - ID}^{max}\right)\right|$ ist und wobei ${n}_{Energiespar - DMRS - ID}^{max}$ ein Maximalwert von n_{Energiespar-DMRS-ID} ist; oder
Entschlüsseln, durch die Endgerätevorrichtung, des ersten PDCCH basierend auf ${n}_{Energiespar - DMRS - ID} ⋅ {2}^{m} + {N}_{ID}^{Zelle}$, wobei $m \geq \left|{log}_{2}\left({N}_{ID , max}^{Zelle}\right)\right|$ ist, wobei m eine positive ganze Zahl ist und wobei ${N}_{ID , max}^{Zelle}$ ein Maximalwert von ${N}_{ID}^{Zelle}$ ist.

7. Verfahren nach Anspruch 6, wobei ein Wert von n 16 ist und ein Wertebereich von m 10≤m≤15 ist.

8. Verfahren nach Anspruch 5, wobei das Entschlüsseln, durch die Endgerätevorrichtung, des ersten physischen Downlink-Steuerkanals, PDCCH, basierend auf der ersten befristeten Kennung eines Funknetzwerks und dem zweiten Verschlüsselungsparameter umfasst:
Entschlüsseln, durch die Endgerätevorrichtung, des ersten PDCCH basierend auf n_{PS-RNTI} · 2^{x} + n_{Energiespar-DMRS-ID}, wobei n_{PS-RNTI} die erste befristete Kennung eines Funknetzwerks ist, wobei n_{Energiespar-DMRS-ID} der zweite Verschlüsselungsparameter ist, wobei $x \geq \left|{log}_{2}\left({n}_{Energiespar - DMRS - ID}^{max}\right)\right|$ ist, wobei x eine positive ganze Zahl ist und wobei ${n}_{Energiespar - DMRS - ID}^{max}$ ein Maximalwert von n_{Energiespar-DMRS-ID} ist; oder
Entschlüsseln, durch die Endgerätevorrichtung, des ersten PDCCH basierend auf n_{Energiespar-DMRS-ID} · 2ⁿ + n_{PS-RNTI}, wobei $n \geq \left|{log}_{2}\left({n}_{PS - RNTI}^{max}\right)\right|$ ist, wobei n eine positive ganze Zahl ist und wobei ${n}_{PS - RNTI}^{max}$ ein Maximalwert von n_{PS-RNTI} ist.

9. Netzwerkvorrichtung, die konfiguriert ist zum Durchführen des Verfahrens nach einem der Ansprüche 1 bis 4, oder Endgerätevorrichtung, die konfiguriert ist zum Durchführen des Verfahrens nach einem der Ansprüche 5 bis 8.

10. Computerprogrammprodukt, das Anweisungen umfasst, die, wenn sie von einem Computer ausgeführt werden, eine Netzwerkvorrichtung veranlassen, das Verfahren nach einem der Ansprüche 1 bis 4 auszuführen oder eine Endgerätevorrichtung veranlassen, das Verfahren nach einem der Ansprüche 5 bis 8 auszuführen.

11. Computerlesbares Speichermedium, das Anweisungen umfasst, die, wenn sie von einem Computer ausgeführt werden, eine Netzwerkvorrichtung veranlassen, das Verfahren nach einem der Ansprüche 1 bis 4 auszuführen oder eine Endgerätevorrichtung veranlassen, das Verfahren nach einem der Ansprüche 5 bis 8 auszuführen.

## Revendications

1. Procédé de brouillage, comprenant :
la génération (1201), par un dispositif de réseau, d'une séquence de code de brouillage pour un premier canal physique de commande de liaison descendante, PDCCH, le premier PDCCH étant utilisé pour transporter des informations d'économie d'énergie, la séquence de code de brouillage étant générée sur la base d'un deuxième paramètre de brouillage, le deuxième paramètre de brouillage étant utilisé pour brouiller un signal de référence de démodulation, DMRS, du premier PDCCH, et le deuxième paramètre de brouillage étant spécifique à un PDCCH transportant des informations d'économie d'énergie ; et
le brouillage (1202), par le dispositif réseau, du premier PDCCH sur la base de la séquence de code de brouillage,
dans lequel la génération, par un dispositif réseau, d'une séquence de code de brouillage pour un premier canal physique de commande de liaison descendante, PDCCH, comprend :
la génération, par le dispositif réseau, de la séquence de code de brouillage pour le premier canal physique de commande de liaison descendante, PDCCH, sur la base d'un identifiant de cellule physique et du deuxième paramètre de brouillage ; ou
dans lequel la génération, par un dispositif réseau, d'une séquence de code de brouillage pour un premier canal physique de commande de liaison descendante, PDCCH, comprend :
la génération, par le dispositif réseau, de la séquence de code de brouillage pour le premier canal physique de commande de liaison descendante, PDCCH, sur la base d'un premier identifiant temporaire de réseau radio et du deuxième paramètre de brouillage, le premier identifiant temporaire de réseau radio étant spécifique à un PDCCH transportant des informations d'économie d'énergie.

2. Procédé selon la revendication 1, dans lequel la génération, par le dispositif réseau, de la séquence de code de brouillage pour le premier canal physique de commande de liaison descendante, PDCCH, sur la base de l'identifiant de cellule physique et du deuxième paramètre de brouillage comprend :
la génération (1301), par le dispositif réseau, de la séquence de code de brouillage pour le premier PDCCH sur la base de ${N}_{ID}^{cell} ⋅ {2}^{x} + {n}_{PowerSaving - DMRS - ID}$, où ${N}_{ID}^{cell}$ est l'identifiant de cellule physique, n_{PowerSaving-DMRS-ID} est le deuxième paramètre de brouillage, $x \geq \left|{log}_{2}\left({n}_{PowerSaving - DMRS - ID}^{max}\right)\right|$, x est un entier positif, et ${n}_{PowerSaving - DMRS - ID}^{max}$ est une valeur maximale de n_{PowerSaving-DMRS-ID} ; ou
la génération, par le dispositif réseau, de la séquence de code de brouillage pour le premier PDCCH sur la base de ${n}_{PowerSaving - DMRS - ID} ⋅ {2}^{m} + {N}_{ID}^{cell}$, où $m \geq \left|{log}_{2}\left({N}_{ID , max}^{cell}\right)\right|$, m est un entier positif, et ${N}_{ID , max}^{cell}$ est une valeur maximale de ${N}_{ID}^{cell}$.

3. Procédé selon la revendication 2, dans lequel une valeur de x est 16, et une plage de valeurs de m est 10≤m≤15.

4. Procédé de brouillage selon la revendication 1, dans lequel la génération, par le dispositif réseau, de la séquence de code de brouillage pour le premier canal physique de commande de liaison descendante, PDCCH, sur la base d'un premier identifiant temporaire de réseau radio et du deuxième paramètre de brouillage comprend :
la génération (1401), par le dispositif réseau, de la séquence de code de brouillage pour le premier PDCCH sur la base de n_{PS-RNTI} · 2^{x} + n_{PowerSaving-DMRS-ID}, x est un entier positif, où n_{PS-RNTI} est le premier identifiant temporaire de réseau radio, n_{PowerSaving-DMRS-ID} est le deuxième paramètre de brouillage, $x \geq \left|{log}_{2}\left({n}_{PowerSaving - DMRS - ID}^{max}\right)\right|$, et ${n}_{PowerSaving - DMRS - ID}^{max}$ est une valeur maximale de n_{PowerSaving-DMRS-ID} ; ou
la génération, par le dispositif réseau, de la séquence de code de brouillage pour le premier PDCCH sur la base de n_{PowerSaving-DMRS-ID} · 2ⁿ + n_{PS-RNTI} , où $n \geq \left|{log}_{2}\left({n}_{PS - RNTI}^{max}\right)\right|$, n est un entier positif, et ${n}_{PS - RNTI}^{max}$ est une valeur maximale de n_{PS-RNTI}.

5. Procédé de désembrouillage, comprenant :
la réception (1203), par un dispositif terminal, d'un premier canal physique de commande de liaison descendante, PDCCH, envoyé par un dispositif réseau, le premier PDCCH étant utilisé pour transporter des informations d'économie d'énergie ; et
le désembrouillage (1204), par le dispositif terminal, du premier PDCCH sur la base d'une séquence de code de brouillage, la séquence de code de brouillage étant générée sur la base d'un deuxième paramètre de brouillage, le deuxième paramètre de brouillage étant utilisé pour brouiller un signal de référence de démodulation, DMRS, du premier PDCCH, et le deuxième paramètre de brouillage étant spécifique à un PDCCH transportant des informations d'économie d'énergie,
dans lequel le désembrouillage, par le dispositif terminal, du premier PDCCH sur la base d'une séquence de code de brouillage comprend :
le désembrouillage, par le dispositif terminal, du premier canal physique de commande de liaison descendante, PDCCH, sur la base d'un identifiant de cellule physique et du deuxième paramètre de brouillage ; ou
dans lequel le désembrouillage, par le dispositif terminal, du premier PDCCH sur la base d'une séquence de code de brouillage comprend :
le désembrouillage, par le dispositif terminal, du premier canal physique de commande de liaison descendante, PDCCH, sur la base d'un premier identifiant temporaire de réseau radio et du deuxième paramètre de brouillage, le premier identifiant temporaire de réseau radio étant spécifique à un PDCCH transportant des informations d'économie d'énergie.

6. Procédé selon la revendication 5, dans lequel le désembrouillage, par le dispositif terminal, du premier canal physique de commande de liaison descendante, PDCCH, sur la base de l'identifiant de cellule physique et du deuxième paramètre de brouillage comprend :
le désembrouillage, par le dispositif terminal, du premier PDCCH sur la base de ${N}_{ID}^{cell} ⋅ {2}^{x} + {n}_{PowerSaving - DMRS - ID}$ , x est un entier positif, où ${N}_{ID}^{cell}$ est l'identifiant de cellule physique, n_{PowerSaving-DMRS-ID} est le deuxième paramètre de brouillage, $x \geq \left|{log}_{2}\left({n}_{PowerSaving - DMRS - ID}^{max}\right)\right|$, et ${n}_{PowerSaving - DMRS - ID}^{max}$ est une valeur maximale de n_{PowerSaving-DMRS-ID} ; ou
le désembrouillage, par le dispositif terminal, du premier PDCCH sur la base de ${n}_{PowerSaving - DMRS - ID} ⋅ {2}^{m} + {N}_{ID}^{cell}$, où $m \geq \left|{log}_{2}\left({N}_{ID , max}^{cell}\right)\right|$, m est un entier positif, et ${N}_{ID , max}^{cell}$ est une valeur maximale de ${N}_{ID}^{cell}$.

7. Procédé selon la revendication 6, dans lequel une valeur de n est 16, et une plage de valeurs de m est 10≤m≤15.

8. Procédé selon la revendication 5, dans lequel le désembrouillage, par le dispositif terminal, du premier canal physique de commande de liaison descendante, PDCCH, sur la base d'un premier identifiant temporaire de réseau radio et du deuxième paramètre de brouillage comprend :
le désembrouillage, par le dispositif terminal, du premier PDCCH sur la base de n_{PS-RNTI} · 2^{x} + n_{PowerSaving-DMRS-ID}, où n_{PS-RNTI} est le premier identifiant temporaire de réseau radio, n_{PowerSaving-DMRS-ID} est le deuxième paramètre de brouillage, $x \geq \left|{log}_{2}\left({n}_{PowerSaving - DMRS - ID}^{max}\right)\right|$, x est un entier positif, et ${n}_{PowerSaving - DMRS - ID}^{max}$ est une valeur maximale de n_{PowerSaving-DMRS-ID} ; ou
le désembrouillage, par le dispositif terminal, du premier PDCCH sur la base de n_{PowerSaving-DMRS-ID} · 2ⁿ + n_{PS-RNTI}, où $n \geq \left|{log}_{2}\left({n}_{PS - RNTI}^{max}\right)\right|$, n est un entier positif, et ${n}_{PS - RNTI}^{max}$ est une valeur maximale de n_{RS-RNTI}.

9. Dispositif réseau configuré pour réaliser le procédé selon l'une quelconque des revendications 1 à 4 ou dispositif terminal configuré pour réaliser le procédé selon l'une quelconque des revendications 5 à 8.

10. Produit programme informatique comprenant des instructions qui, lorsqu'elles sont exécutées par un ordinateur, amènent un dispositif de réseau à mettre en œuvre le procédé selon l'une quelconque des revendications 1 à 4 ou dispositif terminal destiné à exécuter le procédé selon l'une quelconque des revendications 5 à 8.

11. Support de stockage lisible par ordinateur comprenant des instruction qui, lorsqu'elles sont exécutées par un ordinateur, amènent un dispositif réseau à mettre en œuvre le procédé selon l'une quelconque des revendications 1 à 4 ou dispositif terminal destiné à exécuter le procédé selon l'une quelconque des revendications 5 à 8.
